# EUROPEAN PATENT SPECIFICATION

(11) **EP 1 258 277 B1**
(45) Date of publication and mention of the grant of the patent: **05.11.2003**
(21) Application number: 02018932.0
(22) Date of filing: 11.05.1999
(51) Int. Cl.: B01D 39/16, A47L 9/14

(54) **Vacuum cleaner bag**
Staubfilterbeutel für einen Staubsauger
Sac à poussières pour aspirateur

(30) Priority: 11.05.1998 US 85032 P; 11.08.1998 US 96039 P; 29.10.1998 US 106143 P; 07.05.1999 US 306883; 07.05.1999 US 306880
(43) Date of publication of application: 20.11.2002
(62) Divisional of application: 99401164.1
(73) Proprietor: Airflo Europe N.V., 3900 Overpelt (BE)
(72) Inventor: Schultink, Bas, 3900 Overpelt (BE); Schultink, Jan, 3941 Eksel (BE)
(74) Representative: Grünecker, Kinkeldey, Stockmair & Schwanhäusser Anwaltssozietät

(56) References cited:
- EP-A- 0 338 479
- EP-A- 0 893 151
- US-A- 5 672 188

## Description

### Field of the Invention

This invention relates to a novel disposable vacuum cleaner bag composition which is notably superior to existing vacuum cleaner bag constructions in terms of dust holding capacity, minimal increase in pressure drop with dust loading, and in ease of bag fabrication and shape retention, while achieving filtration efficiency values which compare most favorably with premium commercially available bags.

### Background of the Invention

Over the last few years, a number of companies have developed raw materials and components for vacuum cleaner bags to replace the older single layer paper bag and the well-known two-ply bag, having a downstream filter paper and an upstream tissue paper, with bags having upstream layers of either wet-laid tissues or fibrous fleeces such as meltblown (MB) ultra-fine webs occasionally referred to herein as "filtration grade MB fleece". Some manufacturers of vacuum cleaners have even marketed bagless vacuum cleaners to avoid the cost of bags. However, this type of vacuum cleaner has less suction and the compartment holding the dust must be emptied manually, and this largely nullifies its advantages by exposing the worker and the environment to the concentrated dust. Nevertheless, the bagless cleaner has prompted manufacturers to continue to improve the overall performance of bags. Additionally fibrous components randomly laid in three dimensions by dry-laying and wet-laying technologies were developed to provide low density and high bulk for novel filters with greater air permeability and particulate holding capacity.

The prior art addressed the problem of providing a vacuum cleaner bag with improved filtration efficiency. US. Patent No. 5,080,702, Home Care Industries, Inc. discloses a disposable filter container-like bag which comprises an assembly of juxtaposed plies, namely an inner and outer ply of air pervious material. U.S. Patent No. 5,647,881 (EPO 0 822 775 B1) discloses a three layer composite of an outer support layer, middle charged fibrous filter layer having specific properties and an inner diffusion layer unbonded except at least at one seam to the fibrous filter layer. The diffusion layer is described to provide the filter bag as its main function with resistance to shock loading. EP 0 338 479 to Gessner discloses a dust filter bag with a fibrillated fleece-lined outer layer of filter paper. The filtration grade fibrillated fleece layer is upstream of the filter paper, which is provided in form of a standard filter paper.

WO 97 30772 discloses a multi-layer filter bag consisting of a composite of two paper layers acting as coarse filter (inside), a meltblown layer acting as fine filter and a spunbond layer acting as support layer (outside).

In the vacuum bag of the invention the principal function of the inner layer is that of high dust-holding capacity.

With the advent of electrostatically charged MB fleeces, it has been possible to produce bag laminates with filtration efficiencies on the order of 99.8-99.9% to fine dust at a moderate airflow. However, conventional MB webs are essentially flat filters. Consequently, filter structures that utilize MB webs quickly load up with dust, reduce the air suction, and lose further dust pick up ability by the vacuum cleaner. Today, the standard dust bags have an air permeability of 200 to 400 l/(m²x s). It is desirable to have a combination of paper types and other liners, including MB liners that would yield a high efficiency of up to 99.9% and also, allow a high flow with minimal pressure gradient increase measured by the DIN 44956-2 Test.

A primary object of this invention is to provide a novel vacuum cleaner bag composition capable of extremely high filtration efficiency to fine dust and of maximum performance of a vacuum cleaner in terms of continuous high suction for picking up dust without a notable increase in pressure drop until the bag is filled.

A second objective of this invention is to provide a bag with a composition such that it has the rigidity needed for it to be fabricated and shaped on conventional vacuum cleaner bag making equipment.

A third objective of this invention is to construct a vacuum cleaner bag medium that by virtue of its excellent filtration efficiency and superior non-blocking, high airflow performance, will be most suitable to the new European trend of small vacuum cleaners, with of course, smaller vacuum dust bags.

These and other objectives of this inventor will become apparent to one skilled in the art from the following disclosure.

### SUMMARY OF THE INVENTION

The above objectives are solved by a filter for removing particles in accordance with Claim 1.

Particularly, a composite structure is provided for an enhanced performance vacuum cleaner bag comprising a multipurpose filtration layer occasionally referred to herein as "high dust holding capacity", "coarse", or "capacity" paper or layer positioned upstream in the direction of air flow of a second filtration layer selected from among (a) a wet-laid filter paper having a basis weight of about 30-100 g/m² and air permeability of about 100-3000 l/(m² x s), and (b) a thermally bonded spunbond nonwoven having basis weight of about 10-100 g/m² and air permeability of about 500-10,000 l/(m² x s), and preferably about 2,000-6,000 l/(m²x s).

A preferred example is a thermally bonded dry-laid high dust capacity paper containing a blend of fluff pulp, bicomponent fibers (for thermal bonding) and electrostatically charged split film fibers. Basically, in one aspect, the novel enhanced performance vacuum cleaner bag composite structure embodies placing a wet- or dry-laid capacity paper of air permeability up to about 8,000 l/(m²x s) in front of a wet-laid filter paper of air permeability up to about 3000 l/(m²x s).

In another aspect, this invention provides for optional inclusion of a meltblown fleece interlayer having a basis weight of about 10-50 g/m² and an air permeability of about 100-1500 l/(m²x s) positioned between the multipurpose filtration layer and the second filtration layer. In a variation, the optional meltblown fleece interlayer can be electrostatically charged.

A scrim of typically about 13 g/m² basis weight may be placed on one or both sides of the multipurpose filtration layer/secondary filtration layer pair for improved abrasion resistance and ease of bag fabrication. Preferably, the scrim is positioned as the most upstream layer of the structure. Also, any or all of the layers in the novel enhanced performance bag constructions may be adhered by hot melt adhesives, glues or by thermal or ultrasonic bonding, or by a combination of these laminating methods.

A vacuum cleaner bag utilizing the enhanced performance composite structure of this invention has been found to have filtration efficiency performance favorably comparable to other vacuum cleaner bag structures. The enhanced performance structures generally have better than a 95% efficiency to the DIN 44956-2 test and can typically undergo two to three times as many DIN dust loading cycles as comparable bag constructions. They also have up to five times the DIN loading cycles as conventional bag constructions characterized either by a scrim in front of standard wet-laid paper or by a MB filter fleece in front of a standard wet-laid paper. With the optional electrostatically charged MB interlayer the new constructions have superior high fine dust filtration efficiency to 0.1-0.3 µm NaCl particles.

High filtration grade fleeces such as electrostatically charged MB, spunbond modular and microdenier media may also be incorporated into the new constructions of this inventions.

### Brief Description of the Drawings

FIG. 1 is a schematic cross section of a traditional vacuum cleaner bag construction.
FIG. 2 is a schematic cross section of another vacuum cleaner bag construction.
FIG. 3 is a schematic cross section of an embodiment of an enhanced performance bag structure having a meltblown interlayer according to this invention.
FIG. 4 is a schematic cross section of another embodiment of an enhanced performance bag structure having a latex bonded fluff pulp fiber dry-laid high dust capacity multipurpose layer upstream of a wet-laid paper second filtration layer according to this invention.
FIG. 5 is a schematic cross section of another embodiment of an enhanced performance bag structure having a thermally bonded, dry-laid high dust capacity multipurpose layer upstream of a wet-laid paper second filtration layer according to this invention.
FIG. 6 is a plot of pressure drop across selected vacuum cleaner bag structures versus fine dust loading.
FIGS. 7A - 7P are schematic cross sections of selected embodiments of enhanced performance bag structures of this invention in which wet-laid paper layer is the most downstream layer.
FIGS. 8Q - 8AF are schematic cross sections of selected embodiments of enhanced performance bag structures of this invention in which a spunbond fleece layer is the most downstream layer.
FIGS. 9AG - 9BL are schematic cross sections of selected embodiments of enhanced performance bag structures of this invention in which adjacent layers are bonded by a hot melt adhesive.

### DETAILED DESCRIPTION

The filter structures of this invention apply to vacuum cleaner bags, and more generally to vacuum filters. By "vacuum filter" is meant a filter structure intended to operate by passing a gas, preferably air, which entrains usually dry solid particles, through the structure. The convention has been adopted in this application to refer to the sides and layers of the structure in relation to the direction of air flow. That is, the filter inlet side is "upstream" and the filter discharge side is "downstream" for example. Occasionally herein the terms "in front of" and "behind" have been used to denote relative positions of structure layers as being upstream and downstream respectively. Of course, there will be a pressure gradient, sometimes referred to as "pressure drop", across the filter during filtration. Vacuum cleaners typically use bag shaped filters. Normally, the upstream side of a vacuum bag filter is the inside and the downstream side is outside.

DIN 44956-2: The DIN 44956-2 was employed to determine the increase in pressure drop of five different examples of vacuum cleaner bag constructions after dust loading with fine dust at the following levels: 0, 0.5, 1.0, 1.5, 2.0, and 2.5 grams.

Air Permeability after Fine Dust Loading Test: The dust loading part of the DIN 44956-2 was performed at 0.5 gram increments from 0 to 2.5 g/m²/s on seven bags of each sample. However, the pressure drop values were not recorded again. The maximum sustainable air permeability values were then determined on the bags, which had the specified levels of dust loading.

Types of papers which are referred to in this patent application are described in greater detail as follows:

### Standard Vacuum Cleaner Filter Bag Paper

This type of paper has traditionally been used as a single ply in which it provides dust filtration and containment, as well as the strength and abrasion resistance required of a vacuum cleaner bag. This paper is also rigid enough to enable easy fabrication on standard bag manufacturing equipment. The paper is predominantly composed of unbleached wood pulp with 6-7% of a synthetic fiber such as poly[ethylene terephthalate] (PET) type polyester, and is produced by the wet laying process. The standard paper typically has a basis weight of about 30-80 g/m² and commonly about 50 g/m². The PET fibers typically have a fineness of 1.7 dtex and lengths of 6-10 mm. This paper has air permeability in the range of about 200-500 l/(m² x s) and an average pore size of about 30 µm. However, the efficiency as determined from the DIN 44956-2 Test is only about 86%. Another disadvantage is that the pores are quickly clogged with dust and the dust holding capacity is further limited by the very thin paper thickness of only about 0.20 mm.

### Spunbond Nonwoven

A nonwoven of spunbond polymer fibers can be deployed as a secondary filtration layer positioned downstream of the coarse layer. The fibers can be of any spunbond-capable polymer such as polyamides, polyesters or polyolefins. Basis weight of the spunbond nonwoven should be about 10-100 g/m² and preferably about 30-40 g/m². The spunbond nonwoven should have an air permeability of about 500-10,000 l/(m² x s), and preferably about 2,000-6,000 l/(m² x s) as measured by DIN 53887. The spunbond can also be electrostatically charged.

### Scrim or Supporting Fleece

Scrim refers to a generally light basis weight, very open porous paper or nonwoven web. Basis weight of the scrim is typically about 10-30 g/m², and frequently about 13-17 g/m². The scrim, sometimes referred to as a supporting fleece usually has air permeability of about 500-10,000 l/(m² x s). It is primarily employed to protect the high dust holding capacity layer from abrasion. The scrim can also filter the very largest particles. The scrim, as well as any layer of the bag, can be electrostatically charged provided the material has suitable dielectric properties.

### Wet-laid High Dust Capacity Paper

Wet-laid High Dust Capacity Paper, frequently referred to herein as "wet-laid capacity paper" is bulkier, thicker and more permeable than the standard vacuum cleaner bag filter paper. In its role as a pre-filter in the vacuum cleaner bag composite it performs multiple functions. These include resisting shock loading, filtering of large dirt particles, filtering a significant portion of small dust particles, holding large amounts of particles while allowing air to flow through easily, thereby providing a low pressure drop at high particle loading which extends the life of the vacuum cleaner bag.

The wet-laid capacity paper usually comprises a fiber mixture of wood pulp fibers and synthetic fibers. It typically contains up to about 70% wood pulp and correspondingly more synthetic fiber, such as PET, than the standard paper described above. It has a greater thickness than the standard paper of about 0.32 mm at a typical basis weight of 50 g/m². Pore size also is much greater, in that the average pore size can be greater than 160 µm. Thus, the paper is able to hold much more dust in its pores before clogging up. Basis weight of the wet-laid capacity paper typically is about 30-150 g/m² and preferably about 50-80 g/m².

The wet-laid capacity paper has a fine dust particle filtration efficiency of about 66-67 % as determined by the DIN 44956-2. Importantly, the wet-laid capacity paper has air permeability higher than the standard filter paper. The permeability lower limit thus preferably should be at least about 500 l/(m² x s), more preferably at least about 1,000 l/(m² x s) and most preferably at least about 2,000 l/(m² x s). The upper limit of permeability is defined to assure that the paper filters and holds a major fraction of the dust particles larger than about 10µm. Consequently, the downstream secondary high efficiency filter medium is able to filter out and contain fine particles much longer before showing indication of a substantial pressure drop increase across the filter. Accordingly, the air permeability of the wet-laid capacity paper preferably should be at most about 8,000 l/(m² x s), more preferably at most about 5,000 l/(m² x s), and most preferably at most about 4,000 l/(m² x s). It is thus seen that the wet-laid capacity paper is especially well designed as a high dust holding capacity filtration layer to be positioned upstream of the secondary high efficiency filtration layer.

### Dry-laid High Dust Capacity Paper

Prior to this invention, dry-laid high dust capacity paper, sometimes referred to herein as "dry-laid capacity paper", had not been used as a filter in vacuum cleaner bags. Dry-laid paper is not formed from a water slurry, but is produced with air-laying technology and preferably by a fluff pulp process. Hydrogen-bonding which plays a large roll in attracting the molecular chains together does not operate in the absence of water. Thus, at the same basis weight, dry-laid capacity paper, is usually much thicker than standard paper and the wet-laid capacity paper. For a typical weight of 70 g/m², the thickness is 0.90mm, for example.

The dry-laid capacity paper webs can be bonded primarily by two methods. The first method is latex bonding in which the latex binder may be applied from water-based dispersions. Saturation techniques such as spraying or dipping and squeezing (padder roll application) followed in both cases by a drying and heat curing process can be used. The latex binder may also be applied in discrete patterns such as dots diamonds, cross hatches or wavy lines by gravure roll followed by drying and curing.

The second method is thermal bonding, for example by utilizing binder fibers. Binder fibers sometimes referred to herein as "thermally bondable fusing fibers" are defined by the *Nonwoven Fabric Handbook*, (1992 edition) as "Fibers with lower softening points than other fibers in the web. Upon the application of heat and pressure, these act as an adhesive." These thermally bondable fusing fibers generally completely melt at locations where sufficient heat and pressure are applied for the web, thereby adhering the matrix fibers together at their cross-over points. Examples include co-polyester polymers which when heated adhere a wide range of fibrous materials.

In a preferred embodiment thermal bonding can be accomplished by adding from at least 20% preferably up to 50% of a bicomponent ("B/C") polymer fiber to the dry-laid web. Examples of B/C fibers include fibers with a core of polypropylene ("PP") and a sheath of more heat sensitive polyethylene ("PE"). The term "heat sensitive" means that thermoplastic fibers soften and become sticky or heat fusible at a temperature of 3-5 °C below the melting point. The sheath polymer preferably should have a melting point in the range of about 90-160 °C and the core polymer should have a higher melting point, preferably by at least about 5 °C higher than that of the sheath polymer. For example, PE melts at 121 °C and PP melts at 161-163 °C. This aids in bonding the dry-laid web when it passes between the nip of a thermal calendar or into a through-air oven by achieving thermally bonded fibers with less heat and pressure to produce a less compacted. more open and breathable structure. In a more preferred embodiment the core of the core/sheath of the B/C fiber is located eccentric of the sheath. The more that the core is located towards one side of the fiber the more likely that the B/C fiber will crimp during the thermal bonding step, and thereby increase the bulk of the dry-laid capacity paper. This will, of course, improve its dust holding capacity. Thus, in a still further preferred embodiment the core and sheath are located side-by-side in the B/C fiber, and bonding is achieved with a through-air oven. A thermal calendar, which would compress the web more than through-air bonding, is less preferred in this case. Other polymer combinations that may be used in core/sheath or side-by-side B/C fibers include PP with co-polyester low melting polymers, and polyester with nylon 6. The dry-laid high capacity layer can also be constituted essentially completely by bicomponent fibers.

Generally, the average pore size of dry-laid capacity is intermediate between the pore size of the standard paper and wet-laid capacity paper. The filtration efficiency is determined by the DIN 44956-2 Test is approximately 80%. Dry-laid capacity paper should have about the same basis weight and the same permeability as the wet-laid capacity paper described above, i.e., in the range of about 500-8000 l/(m² x s), preferably about 1000-5000 l/(m² x s) and most preferably about 2000-4000 l/(m² x s). It has excellent dust holding capacity and has the advantage of being much more uniform in weight and thickness than the wet-laid papers.

Several preferred embodiments of dry-laid capacity paper are contemplated. One is a latex bonded fluff pulp fiber composition. That is, the fibers comprising the paper consist essentially of fluff pulp. The term "fluff pulp" means a nonwoven component of the vacuum cleaner bag of this invention which is prepared by mechanically grinding rolls of pulp, i.e., fibrous material of wood, then aerodynamically transporting the pulp to web forming components of air laying or dry forming machines. A Wiley Mill can be used to grind the pulp. So-called Dan Web or M and J machines are useful for dry forming. A fluff pulp component and the dry-laid layers of fluff pulp are isotropic and are thus characterized by random fiber orientation in the direction of all three orthogonal dimensions. That is, they have a large portion of fibers oriented away from the plane of the nonwoven web, and particularly perpendicular to the plane, as compared to three-dimensionally anisotropic nonwoven webs. Fibers of fluff pulp utilized in this invention preferably are from about 0.5-5 mm long. The fibers are held together by a latex binder. The binder can be applied either as powder or emulsion. Binder is usually present in the dry-laid capacity paper in the range of about 10-30 wt% and preferably about 20-30 wt% binder solids based on weight of fibers.

In another preferred embodiment the dry-laid capacity paper comprises a thermally bonded blend of fluff pulp fibers and at least one of split film fibers and bicomponent polymer fibers. More preferably, the blend of fluff pulp fibers comprises fluff pulp fibers and bicomponent polymer fibers.

Split film fibers are essentially flat, rectangular fibers which may be electrostatically charged before or after being incorporated into the composite structure of the invention. The thickness of the split film fibers may range from 2-100 µm, the width may range from 5 µm to 2 mm, and the length may range from 0.5 to 15 mm. However, the preferred dimensions of the split film fibers are a thickness of about 5 to 20 µm, a width of about 15 to 60 µm, and a length of about 0.5 to 3 mm.

The split film fibers of the invention are preferably made of a polyolefin, such as polypropylene (PP). However, any polymer which is suitable for making fibers may be used for the split film fibers of the composite structures of the invention. Examples of suitable polymers include, but are not limited to, polyolefins like homopolymers and copolymers of polyethylene, polyterephthalates, such as poly(ethylene terephthalate) (PET), poly(butylene terephthalate) (PBT), poly(cyclohexyl-dimethylene terephthalate) (PCT), polycarbonate, and polychloro-trifluoroethylene (PCTFE). Other suitable polymers include nylons, polyamides, polystyrenes, poly-4-methylpentene-1, polymethylmethacrylates, polyurethanes, silicones, polyphenylene sulfides. The split film fibers may also comprise a mixture of homopolymers or copolymers. In the present application, the invention is exemplified with split film fibers made of polypropylene.

The use of PP polymers with various molecular weights and morphologies in laminate film structures has been shown to produce films with a proper balance of mechanical properties and brittleness required to produce split film fibers. These PP split film fibers may also be subsequently given the desired level of crimp. All dimensions of the split film fibers may, of course, be varied during manufacture of the fibers.

One method for production of the split film fibers is disclosed in US 4,178,157. Polypropylene is melted and extruded into a film which is then blown into a large tube (balloon) into which ambient air is introduced or allowed to enter, in accordance with conventional blow stretching technology. Inflating the balloon with air serves to quench the film and to bi-axially orient the molecular structure of the PP molecular chains, resulting in greater strength. The balloon is then collapsed and the film is stretched between two or more pairs of rollers in which the film is held in the nip of two contacting rollers, with the application of varying amounts of pressure between the two contacting rollers. This results in an additional stretch in the machine direction which is accomplished by driving the second set of rollers at a faster surface speed than the first set. The result is an even greater molecular orientation to the film in the machine direction which will subsequently become the long dimension of the split film fibers.

The film may be electrostatically charged before or after it has been cooled down. Although various electrostatic charging techniques may be employed to charge the film, two methods have been found to be most preferable. The first method involves passing the film about midway in a gap of about 3.81 to 7.62 cm (1.5 to 3 inches) between two DC corona electrodes. Corona bars with emitter pins of metallic wire may be used in which one corona electrode has a positive DC voltage potential of about 20 to 30 kV and the opposing electrode has a negative DC voltage of about 20 to 30 kV.

The second, preferred, method utilizes the electrostatic charging technologies described in US 5,401,446 (Wadsworth and Tsai, 1995), which is referred to as Tantret.TM.Technique I and Technique II, which are further described herein. It has been found that Technique II, in which the film is suspended on insulated rollers as the film passes around the inside circumference of two negatively charged metal shells with a positive corona wire of each shell, imparts the highest voltage potentials to the films. Generally, with Technique II, positive 1000 to 3000 volts or more may be imparted to on one side of the films with similar magnitudes of negative volts on the other side of the charged film.

Technique I, wherein films contact a metal roller with a DC voltage of -1 to -10 kV and a wire having a DC voltage of +20 to +40 kV is placed from about 1 to 2 inches above the negatively biased roller with each side of the film being exposed in succession to this roller/wire charging configuration, results in lower voltage potentials as measured on the surfaces of the films. With Technique I, voltages of 300 to 1500 volts on the film surface with generally equal but opposite polarities on each side are typically obtained. The higher surface potentials obtained by Technique II, however, have not been found to result in better measurable filtration efficiencies of the webs made from the split film fibers. Therefore, and because it is easier to lace up and pass the film through the Technique I device, this method is now predominately used to charge the films prior to the splitting process.

The cooled and stretched film may be hot or cold electrostatically charged. The film is then simultaneously stretched and split to narrow widths, typically up to about 50 µm. The split, flat filaments are then gathered into a tow which is crimped in a controlled numbers of crimps per centimeter and then cut into the desired staple length.

In a particularly preferred embodiment, the dry-laid high dust capacity paper comprises a blend of all of fluff pulp fibers, bicomponent polymer fibers, and electrostatically charged split film fibers. Preferably, the fluff pulp fibers will be present at about 5-85 wt%, more preferably about 10-70 wt%, and most preferably about 40 wt%, the bicomponent fibers at about 10-60 wt%, more preferably about 10-30 wt% and most preferably about 20 wt%, and the electrostatically charged split film fibers at about 20-80 wt%, and more preferably about 40 wt%. This dry-laid high dust capacity may be thermally bonded, preferably at a high temperature of 90-160 °C, more preferably, at a temperature lower than 110 °C and most preferably at about 90 °C.

Other preferred embodiments of the dry-laid capacity paper comprises a thermally bonded paper with 100% "mixed electrostatic fibers", a blend of 20-80% mixed electrostatic fibers and 20-80% B/C fibers, and a blend of 20-80% mixed electrostatic fibers, 10-70% fluff pulp and 10-70% B/C fibers. "Mixed electrostatic fiber" filters are made by blending fibers with widely different tribolelectric properties and rubbing them against each other or against the metal parts of machines, such as wires on carding cylinders during carding. This makes one of the types of fibers more positively or negatively charged with respect to the other type of fiber, and enhances the coulombic attraction for dust particles. The production of filters with these types of mixed electrostatic fibers is taught in US 5,470,485 and European Patent Publication EP 0 246 811 A.

In US 5,470,485, the filter material consists of a blend of (I) polyolefin fibers and (II) polyacrylonitrile fibers. The fibers (I) are bicomponent PP/PE fibers of the core/sheath or side-by-side type. The fibers II are "halogen free". The (I) fibers also have some "halogen-substituted polyolefins"; whereas, the acrylonitrile fibers have no halogen. The patent notes that the fibers must be thoroughly washed with nonionic detergent, with alkali, or solvent and then well rinsed before being mixed together so that they do not have any lubricants or antistatic agents. Although the patent teaches that the fiber mat produced should be needle punched, these fibers could also be cut to lengths of 5-20 mm and mixed with similar length bicomponent thermal binder fibers and also with the possible addition of fluff pulp so that dry-laid thermally bonded paper can be utilized in this invention.

EP 0 246 811 describes the triboelectric effect of rubbing two different types of fibers together. It teaches using similar types of fibers as US 5,470,485, except that the -CN groups of the polyacrylonitrile fibers may be substituted by halogen (preferably fluorine or chlorine). After a sufficient amount of substitution of - CN by - Cl groups, the fiber may be referred to as a "modacrylic" if the copolymer comprises from 35 to 85% weight percent acrylonitrile units. EP 0 246 811 teaches that the ratio of polyolefin to substituted acrylonitrile (preferably modacrylic) may range from 30:70 to 80:20 by surface area, and more preferably from 40:60 to 70:30. Similarly, US 5,470,485 teaches that the ratio of polyolefin to polyacrylonitrile fibers is in the range of 30:70 to 80:20, relative to a surface of the filter material. Thus, these ranges of ratios of polyolefin to acrylic or modacrylic fibers may be used in the above stated proportions in the dry-laid thermally bonded capacity paper.

### Meltblown Fleece

A synthetic polymer fiber meltblown fleece can optionally be deployed as an interlayer between the multipurpose layer and the second filtration layer. The meltblown fleece interlayer increases overall filtration efficiency by capturing some particles passed by the multipurpose filtration layer. The meltblown fleece interlayer also optionally can be electrostatically charged to assist in filtering fine dust particles. Inclusion of a meltblown fleece interlayer involves an increase in pressure drop at given dust loading as compared to composites not having a meltblown fleece interlayer.

The meltblown fleece preferably has a basis weight of about 10 - 50 g/m² and an air permeability of about 100 - 1500 l/(m² x s).

### High Bulk Meltblown Nonwoven

Another discovery from this research to develop improved vacuum cleaner bags was the development of a high bulk MB web which could be used upstream of the filtration grade MB fleece as a pre-filter in place of the wet-laid capacity paper or dry-laid capacity paper. The high bulk MB pre-filter can be made in a meltblowing process using chilled quench air with a temperature of about 10 °C. In contrast, conventional MB normally uses room air at an ambient temperature of 35-45 °C. Also the collecting distance from the MB die exit to the web take-up conveyer is increased to 400-600 mm in the high bulk MB process. The distance normally is about 200 mm for regular MB production. Additionally, high bulk MB nonwoven is made by using a lower temperature attenuation air temperature of about 215-235 °C instead of the normal attenuation air temperature of 280-290 °C, and a lower MB melt temperature of about 200-225 °C compared to 260-280 °C for filtration grade MB production. The colder quench air, lower attenuation air temperature, lower melt temperature and the longer collecting distance cool down the MB filaments more. Removing heat results in best draw down of the filaments, and hence, in larger fiber diameters than would be found in typical filtration grade MB webs. The cooler filaments are much less likely to thermally fuse together when deposited onto the collector. Thus, the High Bulk Meltblown nonwoven would have more open area. Even with a basis weight of 120 g/m², the air permeability of the High Bulk Meltblown nonwoven is 806 l/(m²x s). By contrast, a much lighter (e.g., 22 g/m²) filtration grade MB PP web had a maximum air permeability of only 450 l/(m²x s). The filtration efficiency of the High Bulk MB nonwoven as determined by the DIN 44956-2 Test was 98%. When the two were put together with the High Bulk MB nonwoven on the inside of the bag, the air permeability was still 295 l/(m²x s), and the filtration efficiency of the pair was 99.8%. The high bulk meltblown nonwoven can be uncharged, or optionally electrostatically charged provided that the nonwoven is of material having suitable die-electric properties.

High Bulk MB nonwoven of this invention should be distinguished from "filtration grade MB" which also is employed in the multilayer vacuum filter structure of this disclosure. Filtration grade MB web is a conventional meltblown nonwoven generally characterized by a low basis weight typically of about 22 g/m², and a small pore size. Additional typical characteristics of filtration grade MB nonwoven of polypropylene are shown in Table I. A preferred high bulk MB nonwoven of polypropylene optimally includes about 5-20 wt% ethylene vinyl acetate. Filtration grade MB nonwoven has generally high dust removal efficiency, i.e., greater than about 99%.

**TABLE I**

| | Preferred | More preferred | Most preferred |
|---|---|---|---|
| Filtration Grade MB PP | | | |
| Weight, g/m² | 5 - 150 | 10 - 50 | 22 |
| Thickness, mm | 0.10 - 2 | 0.10 - 1 | 0.26 |
| Air Permeability, l/(m² x s) | 100 - 1500 | 200 - 800 | 450 |
| Tensile Strength MD, N | 0.5 - 15 | 1.0 - 10 | 3.7 |
| Tensile Strength CD, N | 0.5 - 15 | 1.0 - 10 | 3.2 |
| Fiber Diameter, µm | 1 - 15 | 1 - 5 | 2 - 3 |

| High Bulk MB PP | | | |
|---|---|---|---|
| Weight, g/m² | 30 - 180 | 60 - 120 | 80 |
| Thickness, mm | 0.3 - 3 | 0.5 - 2 | 1.4 |
| Air Permeability, l/(m² x s) | 300 - 8000 | 600 - 3000 | 2000 |
| Tensile Strength MD, N | 1.0 - 30 | 2 - 20 | 10 |
| Tensile Strength CD, N | 1.0 - 30 | 2 - 20 | 9.2 |
| Fiber Diameter, µm | 5 - 20 | 10 - 15 | 10 - 12 |

High Bulk MB nonwoven is similar in filter efficiency to dry-laid and wet-laid capacity papers mentioned above. Thus High Bulk MB nonwoven is well-adapted to remove large quantities of large dust particles and to hold large amounts of dust. Accordingly, High Bulk MB nonwoven is suited for placement upstream of, and as a pre-filter for, the filtration grade MB web in a vacuum filter structure of this invention.

### Spunblown (Modular) Nonwoven

A new type of meltblowing technology described in Ward, G., Nonwovens World, Summer 1998, pp. 37-40, is available to produce a Spunblown (Modular) Nonwoven suitable for use as the coarse filter layer in the present invention. Specifications of the Spunblown (Modular) Nonwoven are presented in Table II.

The process for making the Spunblown (Modular) Nonwoven is generally a meltblown procedure with a more rugged modular die and using colder attenuation air. These conditions produce a coarse meltblown web with higher strength and air permeability at comparable basis weight of conventional meltblown webs.

### Microdenier Spunbond Nonwoven

A spunbond ("SB") nonwoven, occasionally referred to herein as microdenier spunbond has specifications which are listed in Table II. Microdenier spunbond is particularly characterized by filaments of less than 12 µm diameter which corresponds to 1.0 denier for polypropylene. In comparison, conventional SB webs for disposables typically have filament diameters which average 20µm. Microdenier spunbond can be obtained from Reifenhauser GmbH (Reicofil III), Koby Steel, Ltd., (Kobe-Kodoshi Spunbond Technology) and Ason Engineering, Inc. (Ason Spunbond Technology).

**TABLE II**

| | Preferred | More preferred | Most preferred |
|---|---|---|---|
| Spunblown (Modular) | | | |
| Weight, g/m² | 20 - 150 | 20 - 80 | 40 |
| Thickness, mm | 0.20 - 2 | 0.20 - 1.5 | 0.79 |
| Air Permeability, l/(m² x s) | 200 - 4000 | 300 - 3000 | 2000 |
| Tensile Strength MD, N | 10 - 60 | 15 - 40 | -- |
| Tensile Strength CD, N | 10 - 50 | 12 - 30 | -- |
| Fiber Diameter, µm | 0.6 - 20 | 2 - 10 | 2 - 4 |

| Microdenier spunbond PP | | | |
|---|---|---|---|
| (Ason, Kobe-Kodoshi, Reicofill III) | | | |
| Weight, g/m² | 20 - 150 | 20 - 80 | 40 |
| Thickness, mm | 0.10 - 0.6 | 0.15 - 0.5 | 0.25 |
| Air Permeability, l/(m² x s) | 500 - 10,000 | 2000 - 6000 | 3000 |
| Tensile Strength MD, N | 10 - 100 | 20 - 80 | 50 |
| Tensile Strength CD, N | 10 - 80 | 10 - 60 | 40 |
| Fiber Diameter, µm | 4 - 18 | 6 - 12 | 10 |

### Comparative Example 1

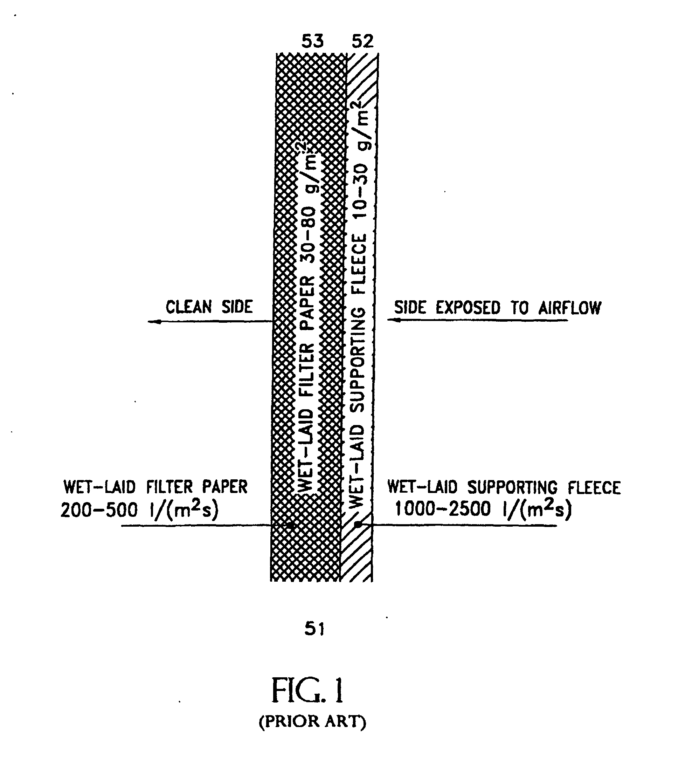

Fig. 1 shows a cross section of a commercially available vacuum cleaner bag structure 51 consisting of a wet-laid tissue fleece liner 52 on the inside (upstream air side) of the bag and a standard wet-laid filter paper 53 on the outside (downstream air side) of the bag. Properties of the individual layers and composite structure are presented in Table III. The liner primarily protects the wet-laid filter paper from abrasion, but also pre-filters out some of the largest particles. The wet-laid filter paper typically filters out particles greater than about 10 µm and some smaller particles.

### Comparative Example 2

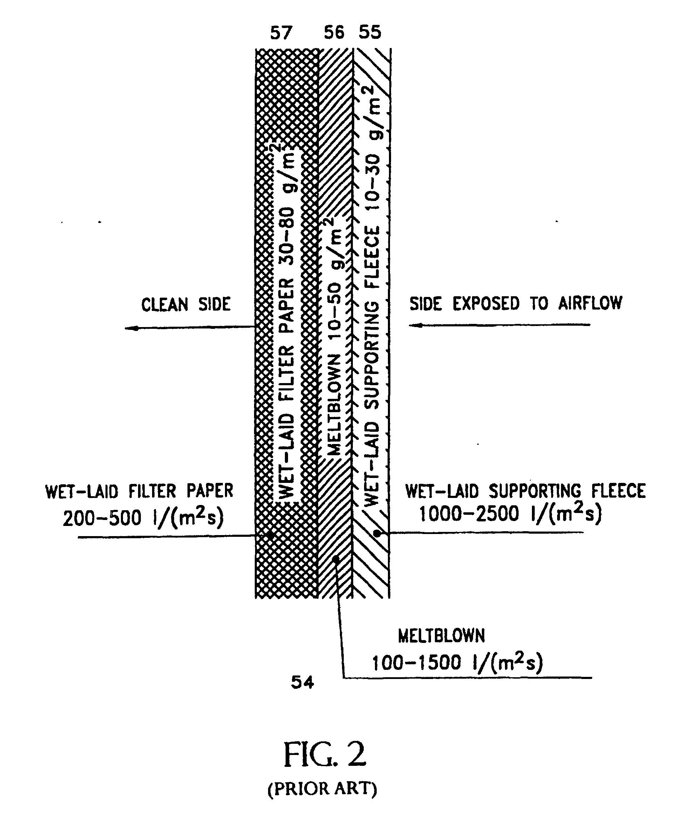

Fig. 2 shows a cross section of a conventional three-layer vacuum cleaner bag structure 54 in which a wet-laid tissue supporting fleece 55 with very little dust holding capacity is added upstream of a MB fleece 56 to protect from abrasion and a wet-laid filter paper 57 is placed on the outside (downstream) to protect the bag from abrasion, to improve stiffness for bag fabrication and to provide additional air filtration. Properties of the individual layers and composite structure are presented in Table III.

### Examples 1-3

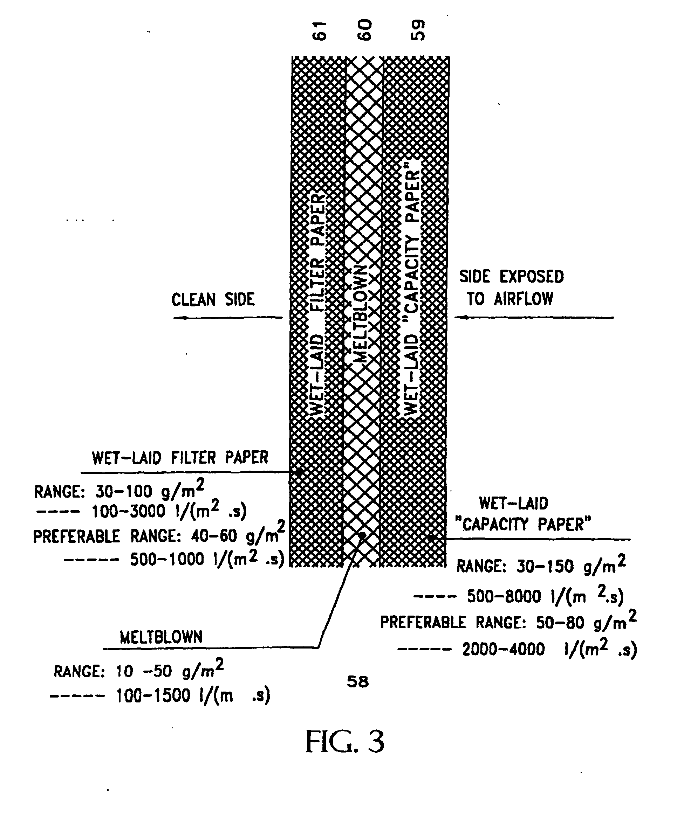

Fig. 3 depicts a novel three-layer vacuum cleaner bag composite structure 58 of Example 1 with a wet-laid high dust capacity paper layer 59 on the inside (upstream air side) in front of a melt blown filter layer 60. A highly air permeable wet-laid filter paper layer 61 is on the outside (downstream air side).

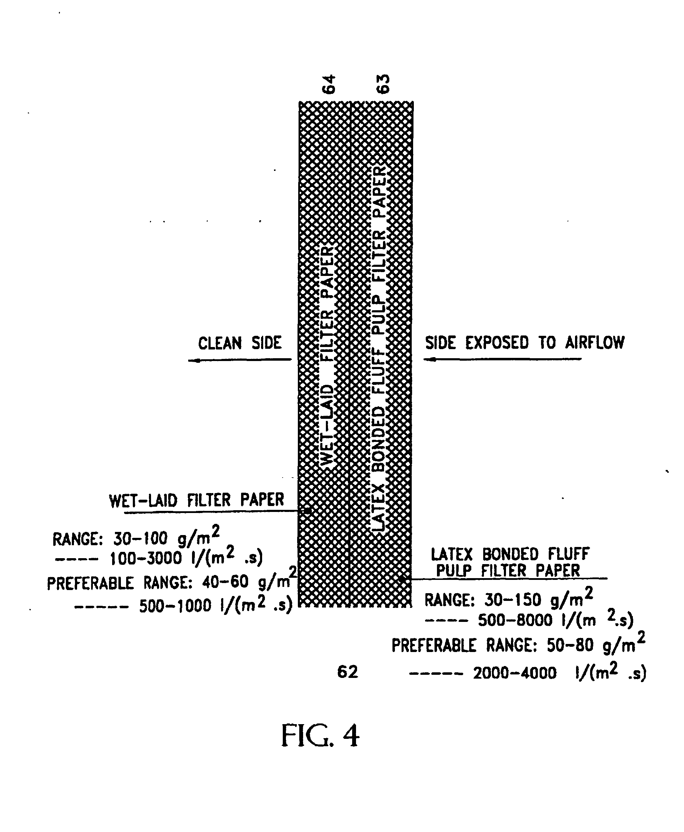

Fig. 4 depicts a novel inventive vacuum cleaner bag composite structure 62 of Example 2 in which a dry-laid high dust capacity paper 63 consisting of 100% fluff pulp fibers held together by 20 weight % latex binder is positioned as the inside layer and a conventional wet-laid filter paper 64 is the outside layer.

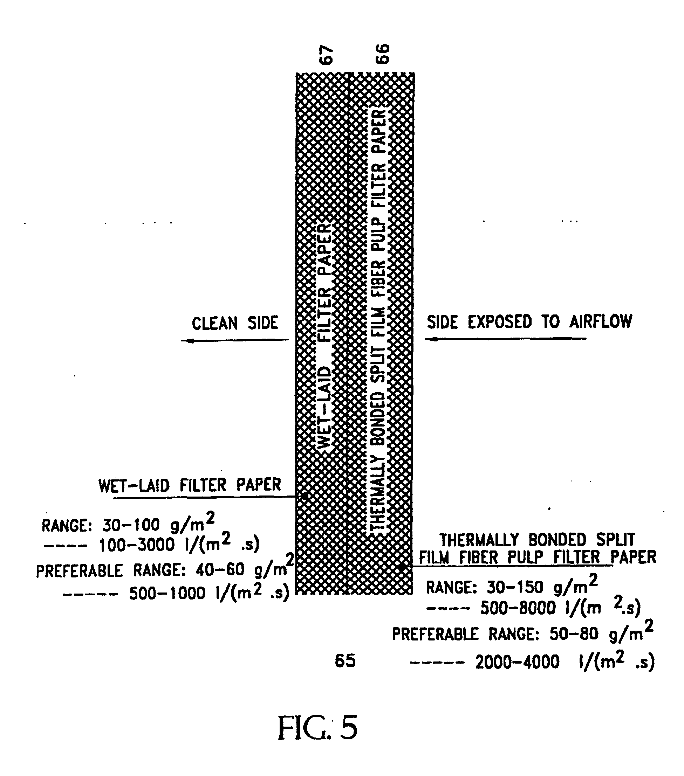

Fig. 5 depicts a novel vacuum cleaner bag construction 65 of Example 3 consisting of a thermally bonded, dry-laid high dust capacity paper 66 in the upstream air position inside the bag with a highly permeable wet-laid filter paper 67 on the outside of the bag. The fiber content of the dry-laid high dust capacity paper 66 consists of a blend of 40% fluff pulp fibers, 40% split film fibers and 20% bicomponent polymer fibers. Properties of the individual layers and composite structures are presented in Table III which compares filtration properties of various composite structures at 100 l/min. flow. Data in Table III shows that Examples 1 and 3 structures produced dramatically increased filtration efficiency relative to Comp. Ex. 1 with only slight pressure drop increase. Also, Example 1 produced slightly better filtration efficiency at the same pressure drop as Comp. Ex. 2. Example 2 compared well with commercially available Comp. Ex. 1 structure.

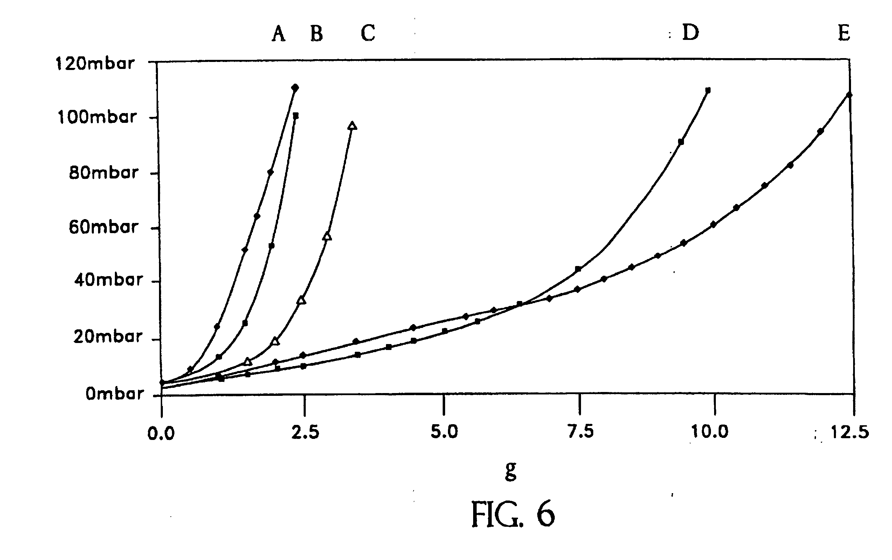

Each of the above-described example structures was tested for fine dust loading and the results are presented in Table IV. Fig. 6 is a plot of the pressure drop across the bag structures versus grams of fine dust loading in which curves A-E represent Comparative Examples 1 and 2, (A and B) and Examples 1-3 (C, D and E), respectively. The plot shows that conventional bag structures attained high pressure drops rapidly with very low loadings (i.e., about 100 mbar at less than 2.5 g). Example 1 arrived at equivalent high pressure drop after 3.5 g dust loading, which is approximately 40% improvement. Examples 2 and 3 produced remarkably superior fine dust loading results by reaching about 100 mbar pressure drop at about 10 g and 12.5 g loading and with pressure drop not exceeding about 30 mbar at fine dust loading of 6.5 g and about 40 mbar until after about 7.5 g. These results demonstrate about 300-400% improvement over conventional filter constructions. Notably, Examples 2 and 3 do not include MB filter interlayer between the upstream high dust capacity multipurpose layer and the downstream second filtration layer.

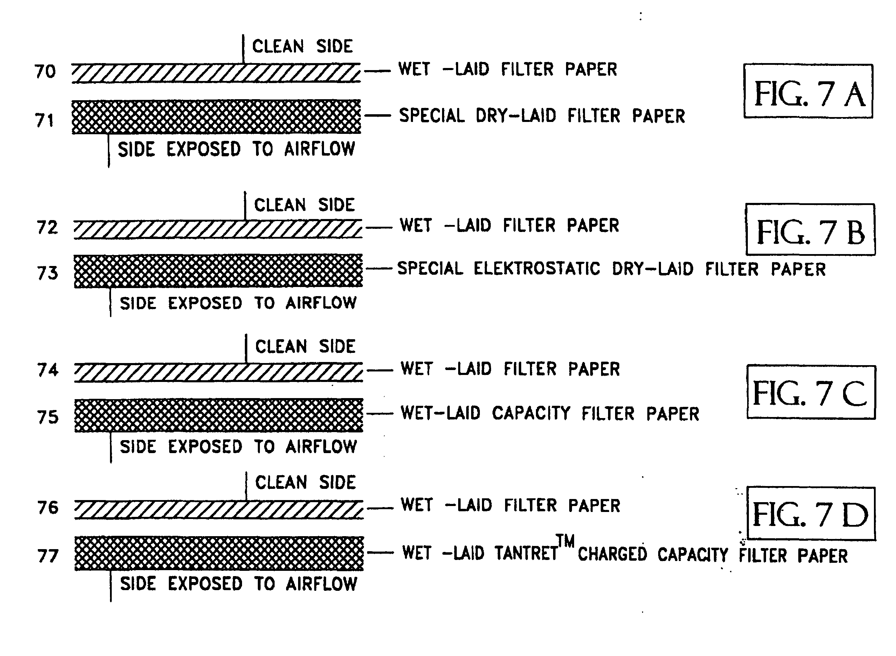

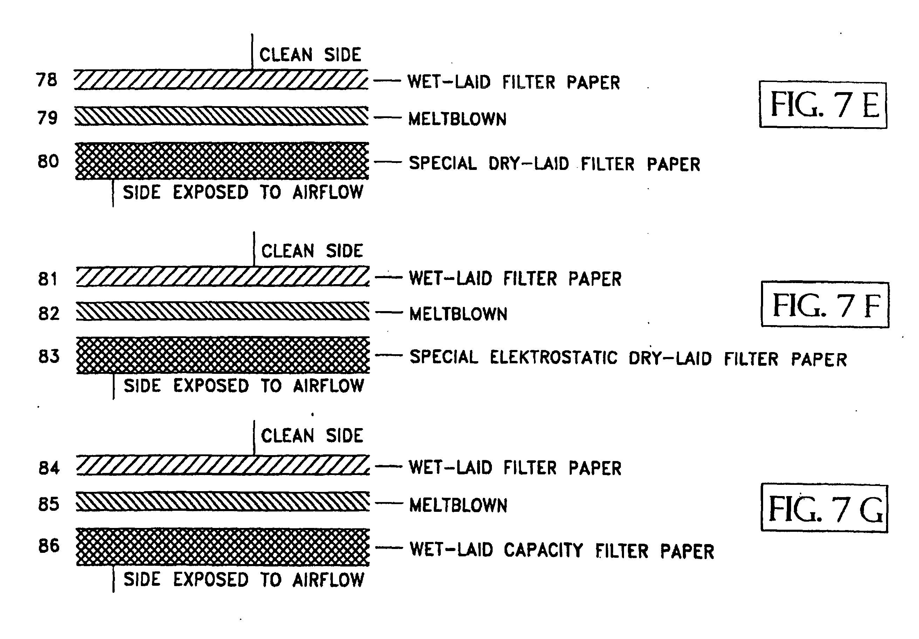

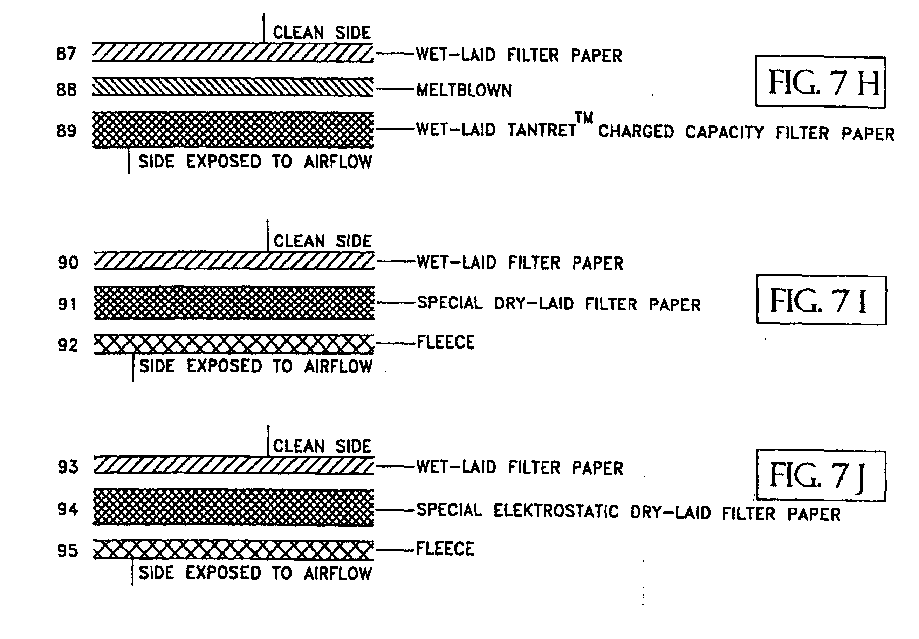

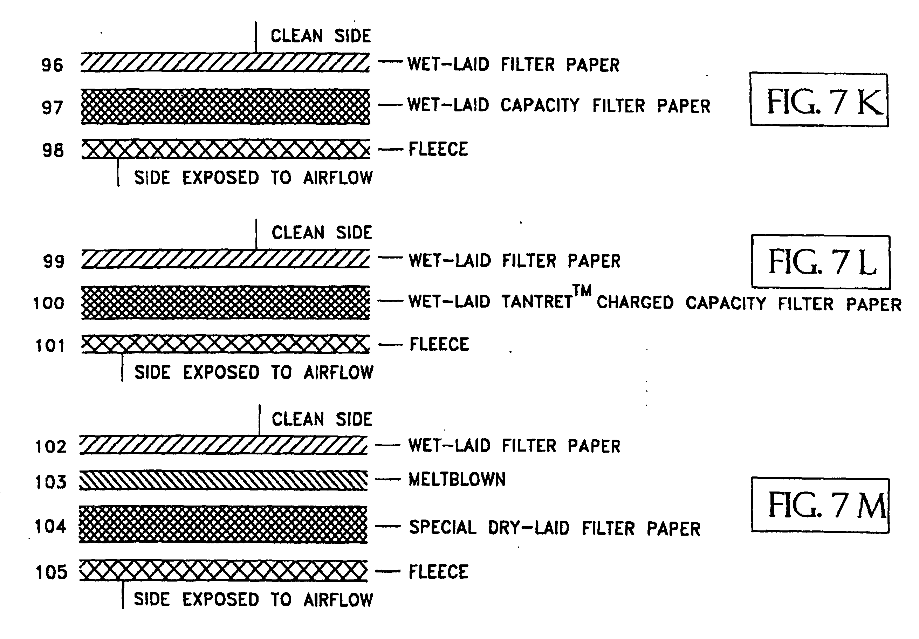

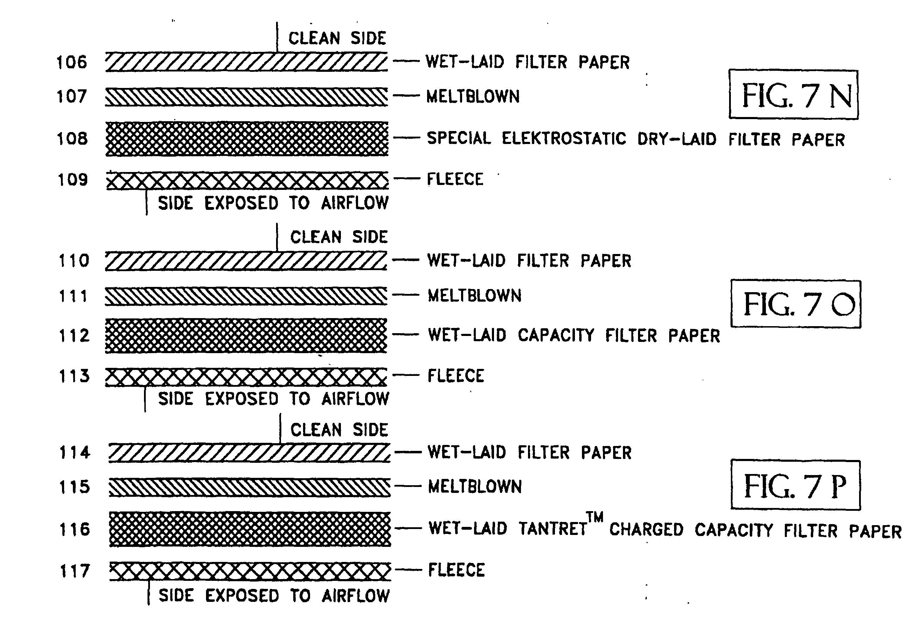

Additional examples of enhanced performance vacuum cleaner bag composite structures contemplated to fall within the definition of the present invention as illustrated in Figs. 7-9. In particular, Fig. 7A shows a two layer structure in which the upstream, multipurpose layer is a dry-laid filter composition of exclusively fluff pulp fibers held together with a dried latex binder, or of a blend of bicomponent polymer fibers and fluff pulp fibers which are thermally bonded. The multipurpose layer has high air permeability and dust holding capacity.

Fig. 7B also shows a two-layer structure in which the multipurpose layer is a three component blend of fluff pulp fibers, bicomponent polymer fibers and electrostatically charged split film fibers. Again, the blend is held together by thermal bonding, primarily of the low-melting bicomponent polymer fiber composition.

Fig. 7C shows another two-layer structure with specially developed, high dust holding capacity wet-laid filter paper in the upstream position. The fibers in the wet laid paper are a blend of synthetic fibers and natural, i.e., wood pulp, fibers. Preferably, the synthetic fibers are polyester, and more preferably, polyethylene terephthalate. The fibers are bonded by a latex binder at about 10-30 wt% dry binder solids based on fiber weight.

Fig. 7D illustrates a two-layer structure in which the upstream, multipurpose layer comprises polyolefin, and preferably polypropylene fibers. This layer is electrostatically charged, preferably, using the Tantret(TM) technology.

Figs. 7E-7H show structures which are the same as those of Figs. 7A-7D, respectively, except that an optional, meltblown fleece interlayer is inserted between the multipurpose filter layer and the second filtration layer.

Figs. 7I-7P show structures which correspond to Figs.7A-7H, respectively, except that an optional fleece scrim has been added to the side of the vacuum filter bag exposed to the airflow to protect the next layer from abrasion and to filter some of the very large dust particles.

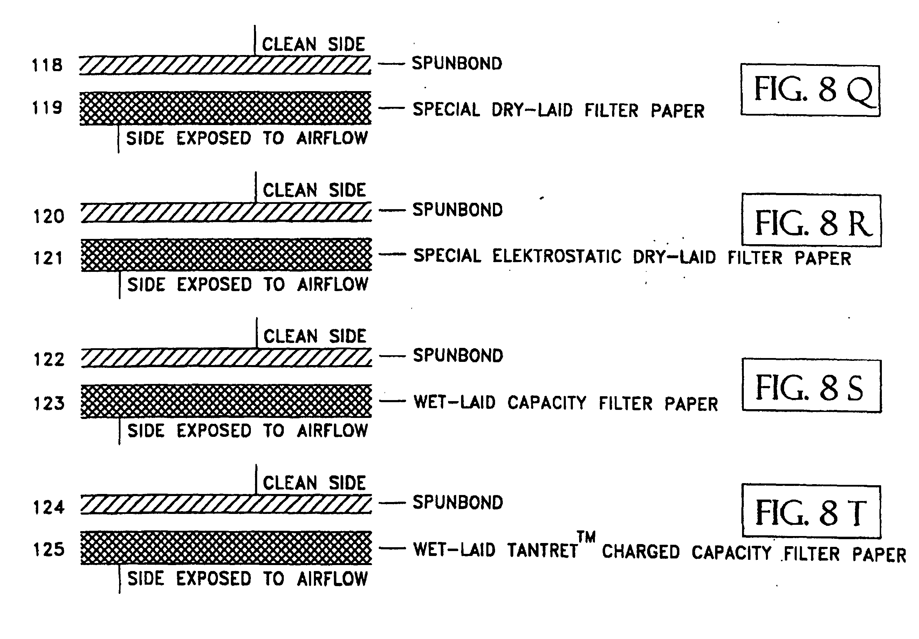

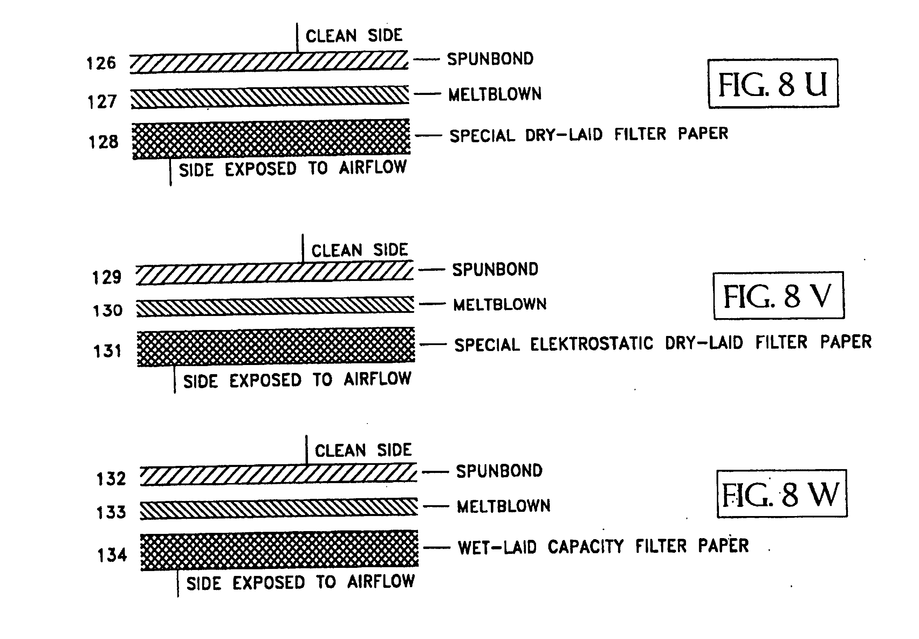

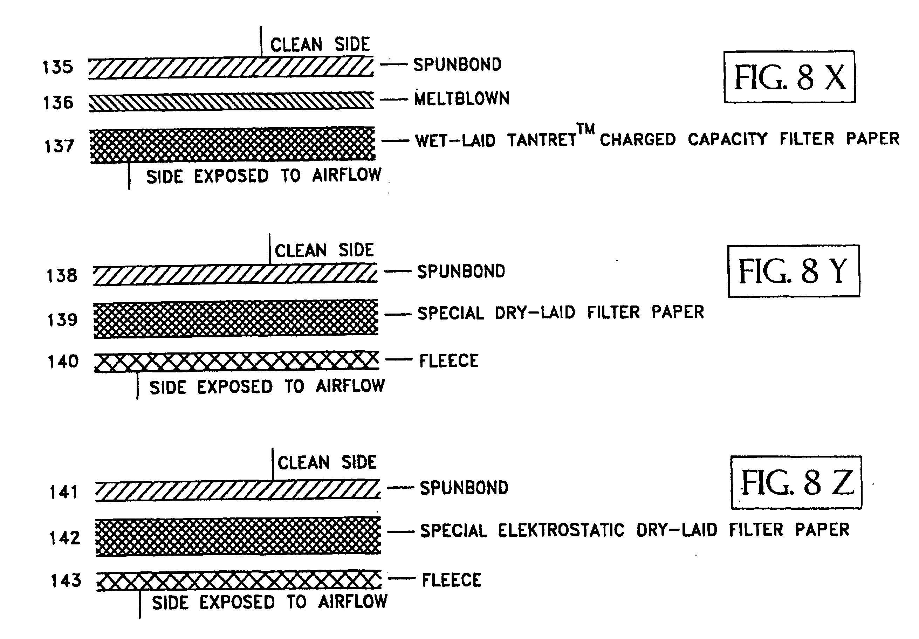

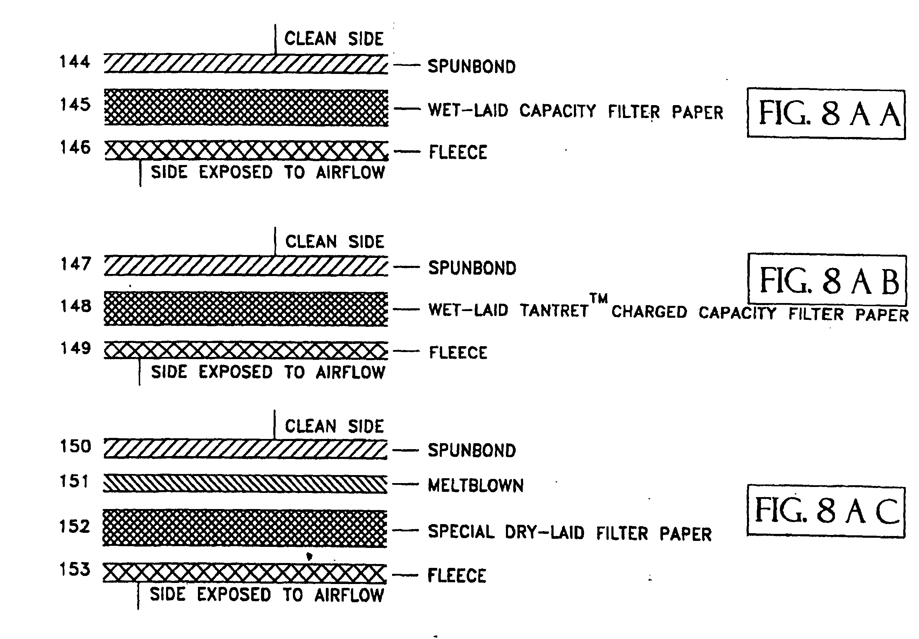

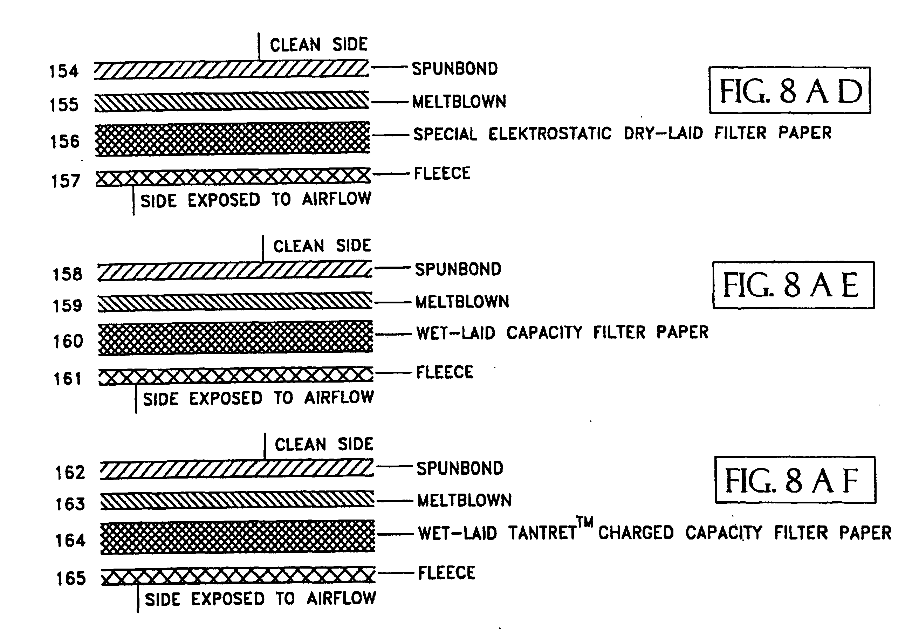

Figs. 8Q-8AF show structures which correspond to Figs. 7A-7P, respectively, except that an optional spunbond fleece is placed in the most downstream layer position and hence is on the outside of the vacuum cleaner bag.

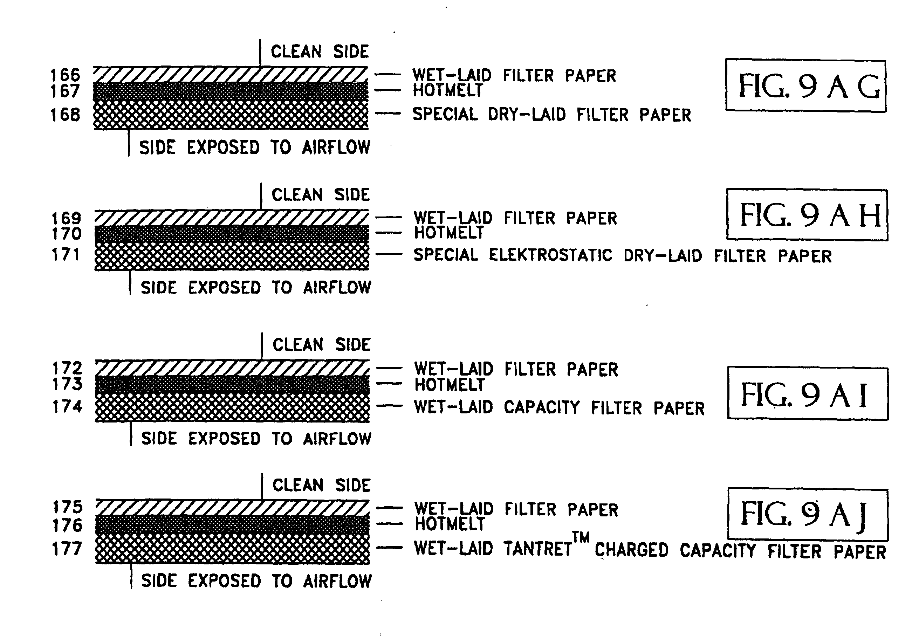

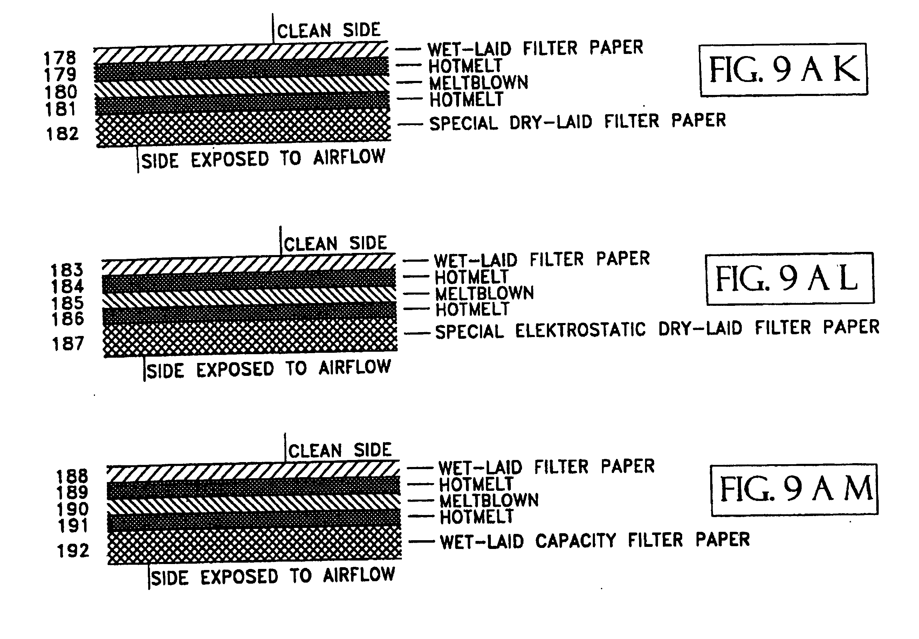

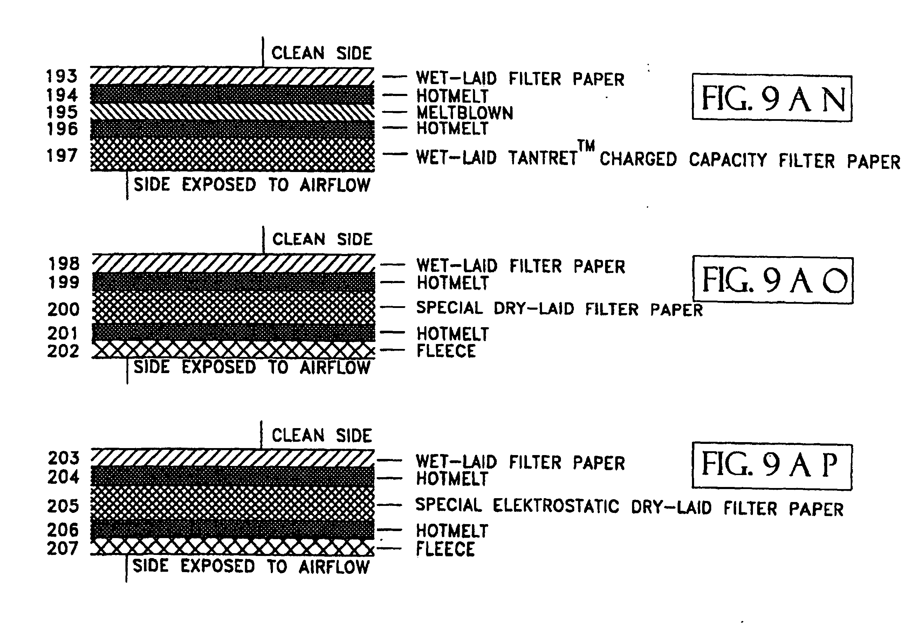

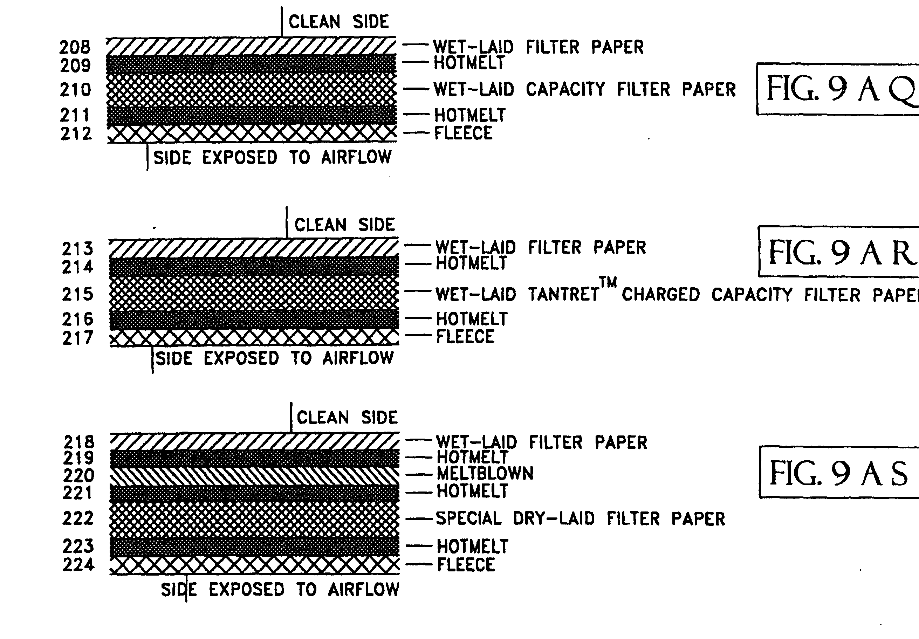

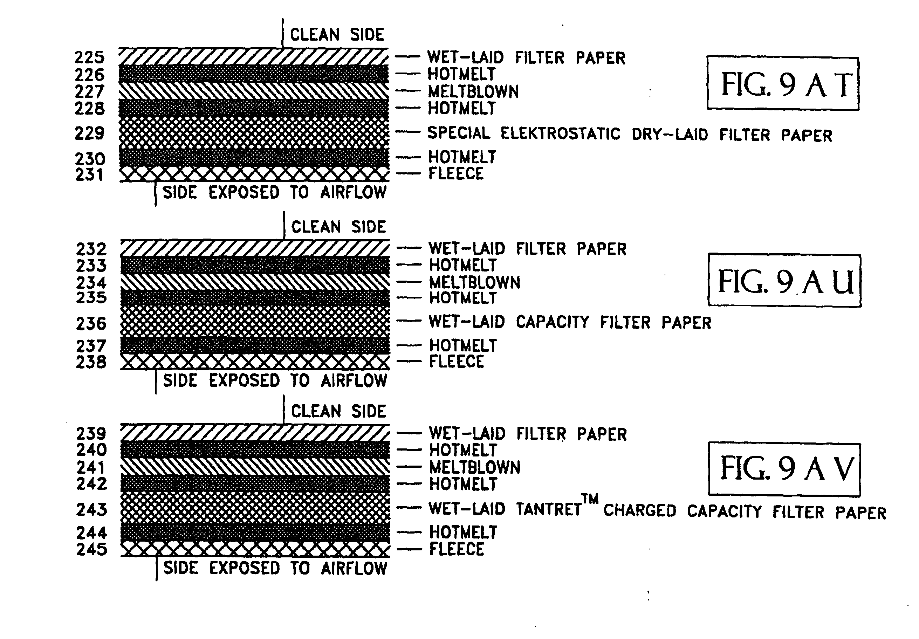

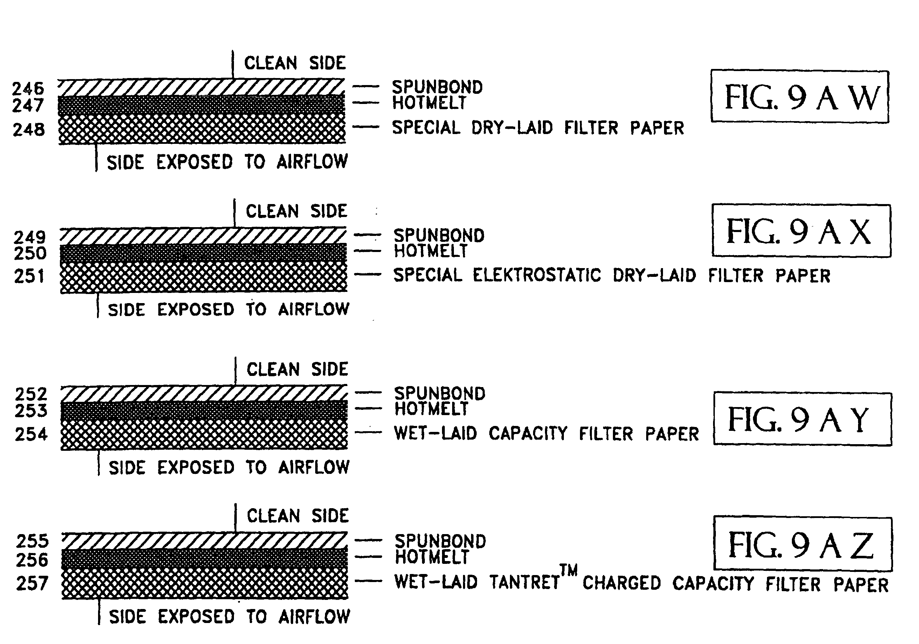

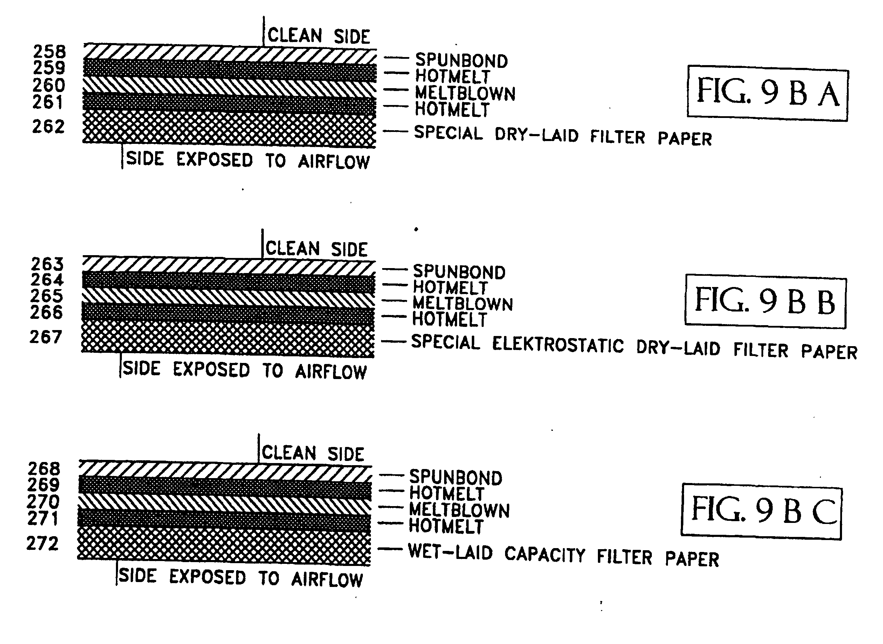

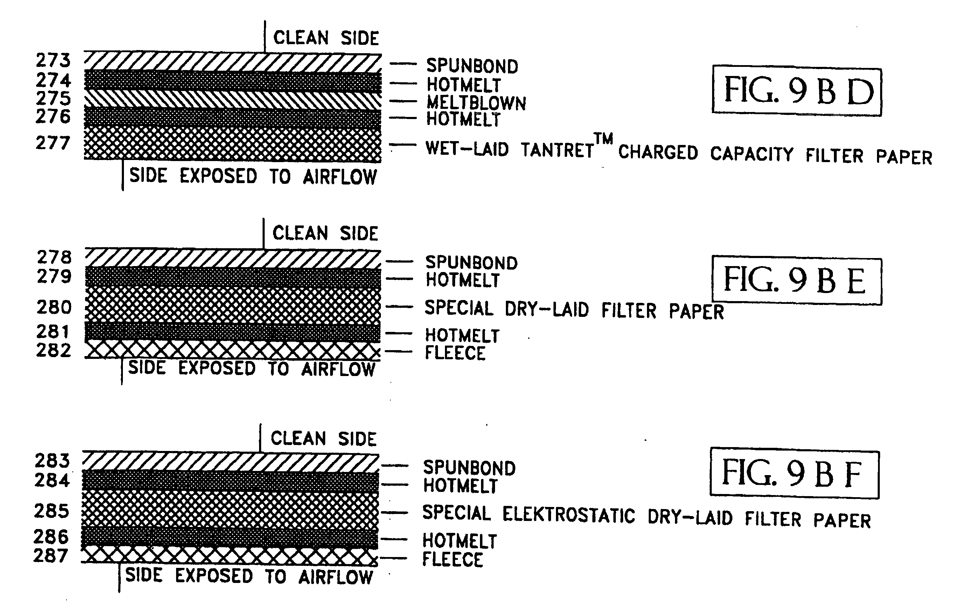

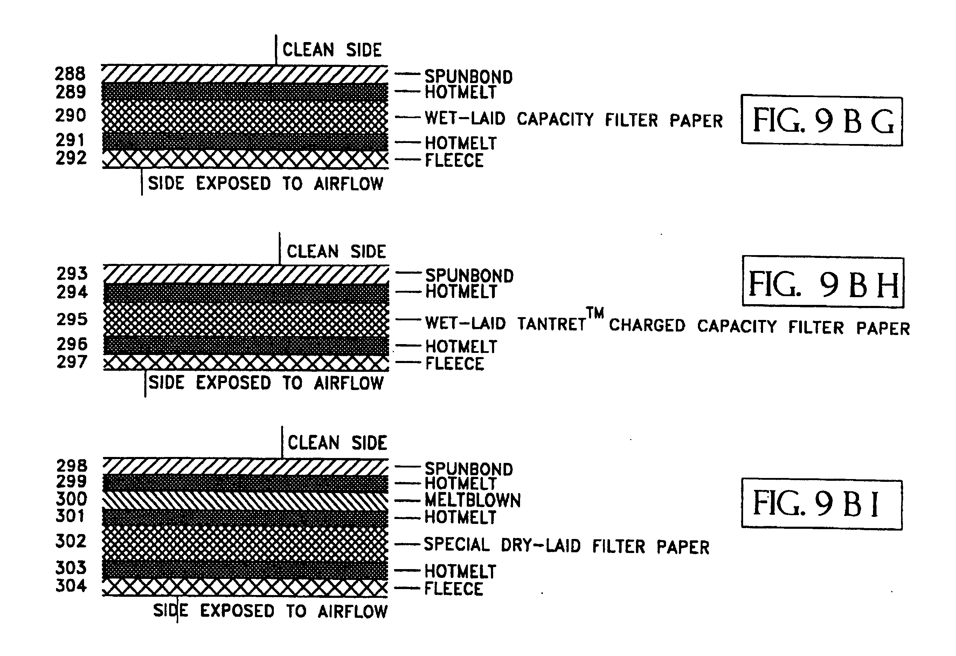

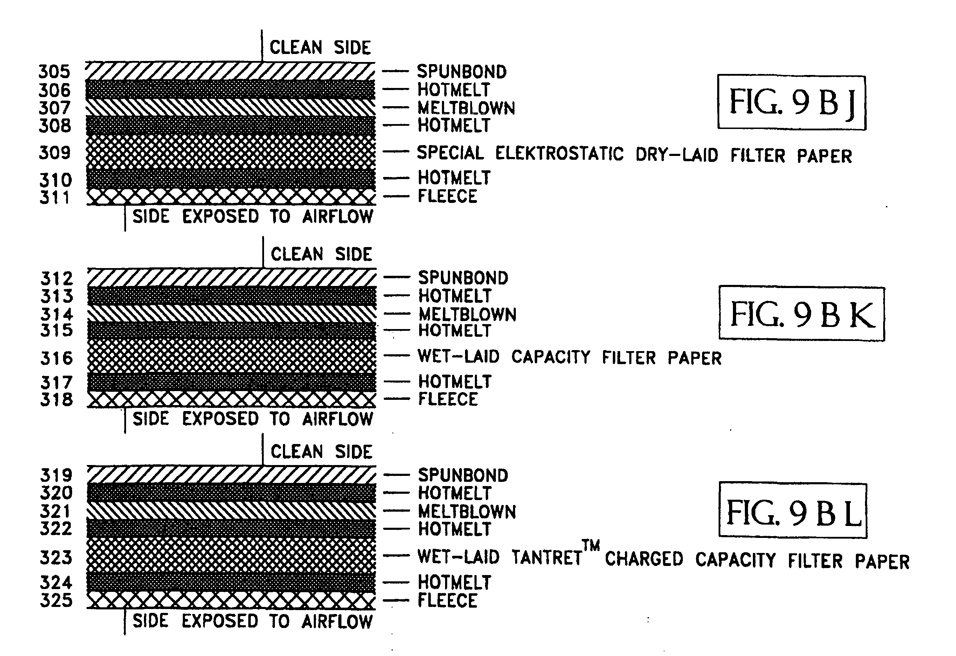

Figs. 9AG-9BL show structures which correspond to Figs. 7A-8AF, respectively, except that adjacent layers of the composite are bonded by a hot melt adhesive. The hot melt may also be replaced or used in conjunction with all known methods of laminating, including glues and thermal and ultrasonic bonding. Although the figures only illustrate embodiments in which an adhesive is present between all adjacent layers, it is contemplated that all layers need not be joined in this way, i.e., some layers of the composite will be bonded with adhesive and others will not.

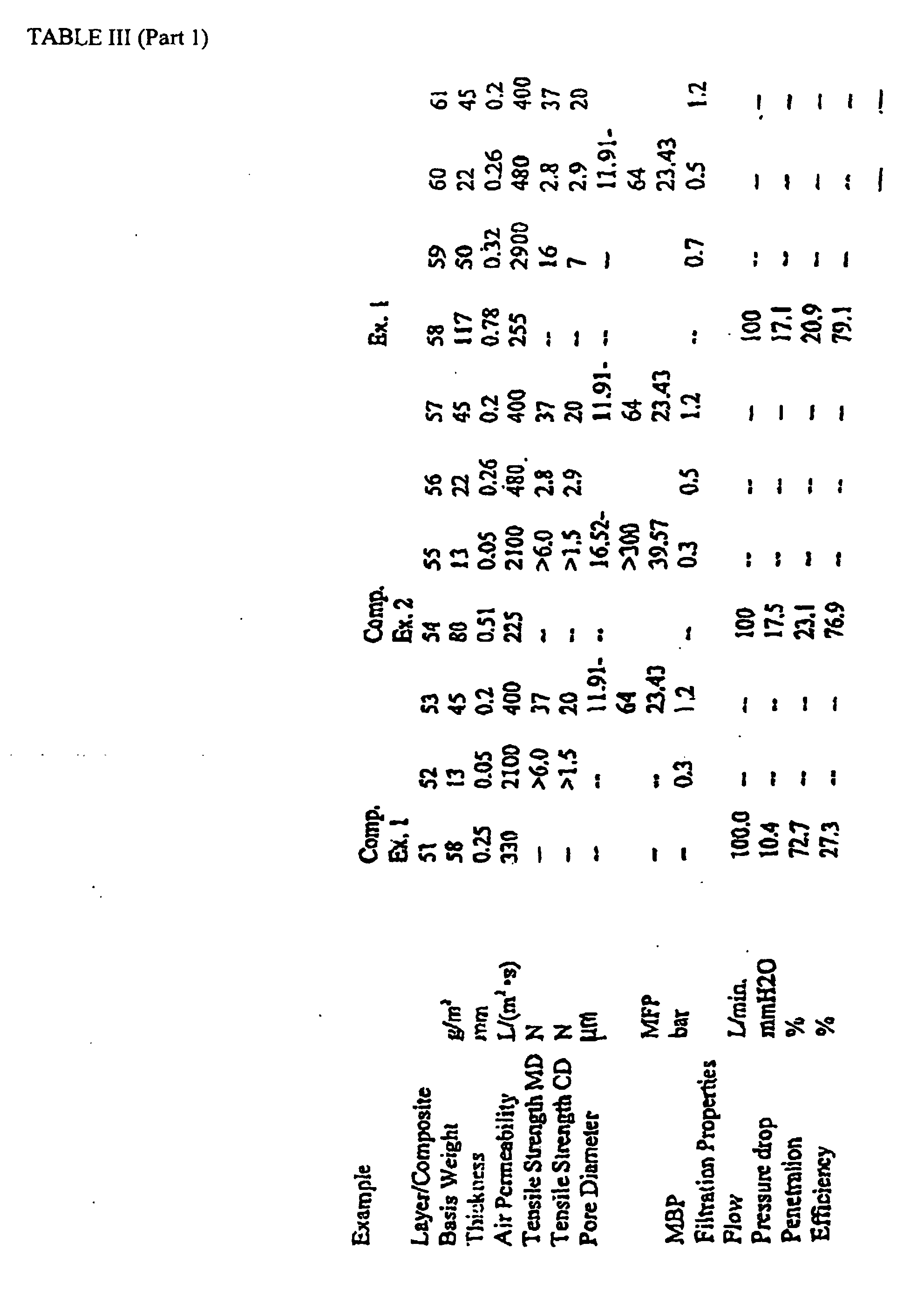

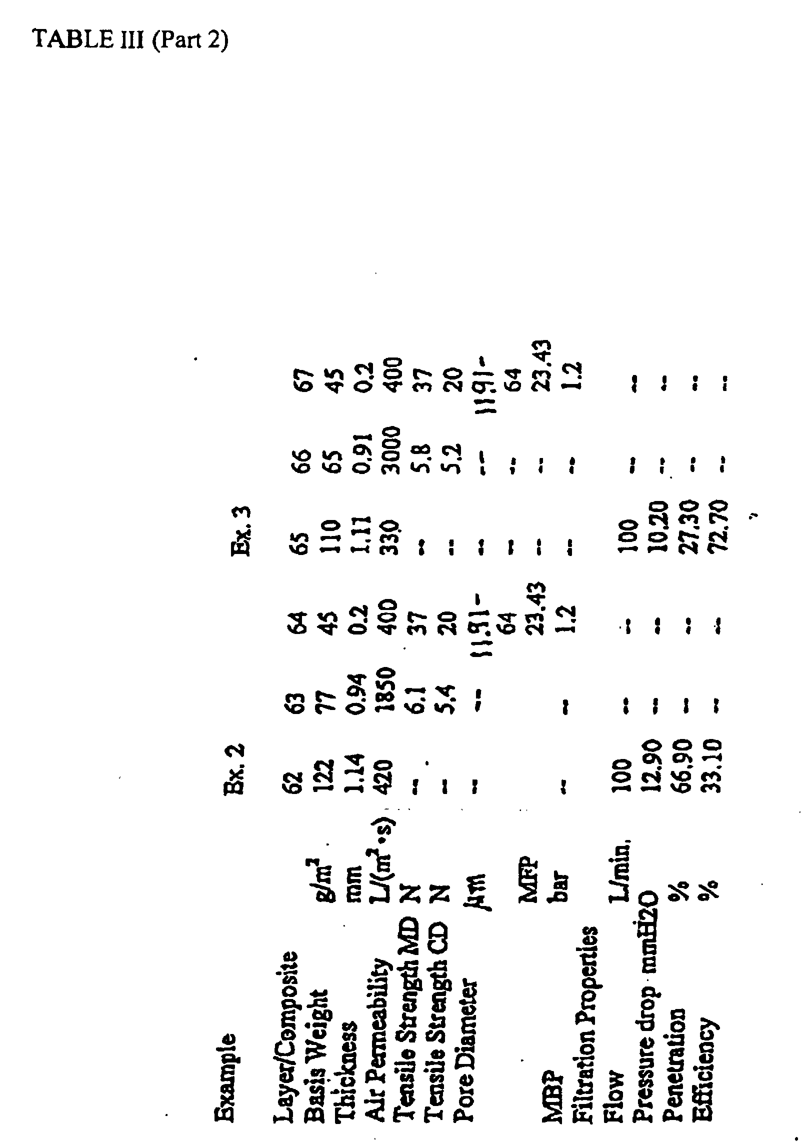

**TABLE IV**

| | Comp. Ex. 1 | Comp. Ex. 2 | Ex. 1 | Ex. 2 | Ex. 3 |
|---|---|---|---|---|---|
| Efficiency (%) | 96.0 | 99.6 | 99.6 | 99.7 | 99.8 |
| Air flow at 2 mbar (L) | 7.00 | 4.15 | 4.4 | 5.90 | 6.40 |
| Dust Loading (g) | Pressure Drop (mbar) 10 Liter | | | | |
| 0 | 3.21 | 5.14 | 4.86 | 3.44 | 3.20 |
| 0.5 | 8.90 | 7.70 | 6.02 | 4.05 | 4.48 |
| 1.0 | 24.19 | 13.37 | 7.87 | 5.79 | 6.25 |
| 1.5 | 51.64 | 25.87 | 11.80 | 7.20 | 8.45 |
| 2.0 | 79.58 | 53.06 | 19.03 | 8.61 | 11.30 |
| 2.5 | 110.00 | 100.32 | 33.22 | 10.14 | 13.70 |
| 3.0 | | | 56.56 | 11.98 | 16.16 |
| 3.5 | | | 96.30 | 13.87 | 18.33 |
| 4.0 | | | | 16.07 | 20.62 |
| 4.5 | | | | 18.26 | 22.62 |
| 5.0 | | | | 20.81 | 24.61 |
| 5.5 | | | | 23.46 | 26.83 |
| 6.0 | | | | 27.23 | 29.19 |
| 6.5 | | | | 31.21 | 31.09 |
| 7.0 | | | | 35.68 | 32.99 |
| 7.5 | | | | 42.74 | 36.00 |
| 8.0 | | | | 50.70 | 39.60 |
| 8.5 | | | | 62.02 | 43.95 |
| 9.0 | | | | 74.20 | 48.28 |
| 9.5 | | | | 89.20 | 53.20 |
| 10.0 | | | | 106.36 | 58.68 |
| 10.5 | | | | | 65.57 |
| 11.0 | | | | | 73.80 |
| 11.5 | | | | | 81.75 |
| 12.0 | | | | | 93.04 |
| 12.5 | | | | | 106.11 |

## Claims

1. A filter for removing particles entrained in a gas comprising a multipurpose filtration capacity layer positioned upstream in the direction of air flow of a second filtration layer,
the second filtration layer being selected from among:
(a) a wet-laid or dry-laid filter having a base weight of about 30-100 g/m² and an air permeability of about 100-3000 l/(m² x s); and
(b) thermally bonded nonwoven having a basis weight of about 10-100 g/m² and an air permeability of about 100-3000 l/(m² x s); and
the multipurpose filtration capacity layer being selected from among:
(a) a wet-laid or dry-laid high dust capacity paper having a basis weight of about 30-150 g/m² and an air permeability of about 500-8000 l/(m² x s);
(b) high bulk melt nonwoven having a basis weight of about 30-180 g/m² and an air permeability of about 300-1500 l/(m² x s); and
(c) Spunblown Modular paper having a basis weight of about 20-150 g/m² and an air permeability of about 200-3000 l/(m² x s).

2. The filter of claim 1 in which the mulitpurpose filtration layer is operative to provide to the filter a pressure drop of at most 30 mbar at fine dust particle loading of at least 6.5 grams determined by DIN 44956-2.

3. The filter of claim 1 in which the wet-laid high dust capacity paper comprises fibers comprising at least 15% chargeable or unchargeable synthetic fiber and a complementary amount of wood pulp fibers, and binder.

4. The filter of claim 3 in which the synthetic fibers are polyester.

5. The filter of claim 3 in which the synthetic fibers are polyolefin fibers.

6. The filter of claim 5 in which the polyolefin fibers are electrostatically charged polypropylene.

7. The filter of claim 1 in which the multipurpose filtration layer comprises a dry-laid, high dust capacity paper of composition selected from among
(a) latex bonded fluff pulp fibers,
(b) thermally bondable fusing fibers,
(c) a thermally bonded blend of thermally bondable fusing polymer fibers and fluff pulp fibers,
(d) a thermally bonded blend of thermally bondable fusing fibers, fluff pulp fibers and split film fibers,
(e) thermally bonded blend of mixed electrostatic fibers.

8. The filter of claim 7 in which thermally bondable fusing fibers are bicomponent polymer fibers.

9. The filter of claim 8 in which bicomponent polymer fibers are polyolefin.

10. The filter of claim 9 in which the bicomponent polymer fibers have a core of polypropylene and a sheath of polyethylene.

11. The filter of claim 8 in which the bicomponent polymer fibers have a core disposed eccentrically relative to a sheath.

12. The filter of claim 11 in which the core is positioned alongside the sheath.

13. The filter of claim 7 in which the split film fibers are electrostatically charged.

14. The filter of claim 1 further comprising a meltblown fleece layer having a basis weight of about 10-50 g/m² and an air permeability of about 100-1500 l/(m² x s) positioned between the multipurpose filtration layer and the second filtration layer.

15. The filter of claim 14 in which the meltblown fleece layer is electrostatically charged.

16. The filter of claim 1 in which the thermally bonded nonwoven is the most downstream layer of the structure.

17. The filter of claim 1 in which at least two adjacent layers of the structure are bonded.

18. The filter of claim 17 in which the two bonded adjacent layers are the multipurpose filtration layer and the second filtration layer.

19. The filter of claim 17 in which all adjacent layers of the structure are bonded.

20. The filter of claim 1 in which the high bulk meltblown nonwoven is electrostatically charged.

21. The filter of claim 1 in which at least one of the layers is of a chargeable material and the chargeable layer is electrostatically charged.

22. A disposable vacuum cleaner bag comprising a filter of any one of the claims 1 to 21.

## Patentansprüche

1. Filter zum Entfernen von Partikeln, die in einem Gas mitgerissen werden, umfassend eine Mehrzweck-Filtrationskapazitätsschicht, die stromaufwärts einerzweiten Filtrationsschicht in Richtung des Luftstroms angeordnet ist,
wobei die zweite Filtrationsschicht ausgewählt ist aus:
(a) einem naßgelegten oder trockengelegten Filter mit einem Flächengewicht von etwa 30 - 100 g/m² und einer Luftdurchlässigkeit von etwa 100 - 3000 l/(m² x s); und
(b) einem thermisch gebondeten Nonwoven mit einem Flächengewicht von etwa 10 - 100 g/m² und einer Luftdurchlässigkeit von etwa 100- 3000 l/(m² x s); und
die Mehrzweck-Filtrationskapazitätsschicht ausgewählt ist aus:
(a) einem naßgelegten oder trockengelegten Hochstaubkapazitätspapier mit einem Flächengewicht von etwa 30 - 150 g/m² und einer Luftdurchlässigkeit von etwa 500 - 8000 l/(m² x s);
(b) einem hochvoluminösen Meltblown-Nonwoven mit einem Flächengewicht von etwa 30 - 180 g/m² und einer Luftdurchlässigkeit von etwa 300 - 1500 l/(m² x s); und
(c) einem modularen Spunblown-Papier mit einem Flächengewicht von etwa 20 - 150 g/m² und einer Luftdurchlässigkeit von etwa 200 - 3000 l/(m² x s).

2. Filter nach Anspruch 1, wobei die Mehrzweck-Filtrationsschicht wirksam ist, um für den Filter einen Druckabfall von höchstens 30 mbar bei einer Feinstaubbeladung von wenigstens 6,5 Gramm bestimmt nach DIN 44956-2 bereitzustellen.

3. Filter nach Anspruch 1, wobei das naßgelegte Hochstaubkapazitätspapier Fasern umfasst, umfassend wenigstens 15% aufladbare oder nicht-aufladbare synthetische Fasern und eine komplementäre Menge an Wood-Pulp-Fasern und Bindemittel.

4. Filter nach Anspruch 3, wobei die synthetischen Fasern Polyester sind.

5. Filter nach Anspruch 3 ,wobei die synthetischen Fasern Polyolefinfasem sind.

6. Filter nach Anspruch 5, wobei die Polyolefinfasern elektrostatisch geladenes Polypropylen sind.

7. Filter nach Anspruch 1, wobei die Mehrzweck-Filtrationsschicht ein trockengelegtes Hochstaubkapazitätspapier einer Zusammensetzung umfasst, ausgewählt aus
(a) latex-gebondeten Fluff-Pulp-Fasern,
(b) thermisch bondbaren Schmelzfasern,
(c) einer thermisch gebondeten Mischung aus thermisch bondbaren Polymerschmelzfasern und Fluff-Pulp-Fasern,
(d) einer thermisch gebondeten Mischung aus thermisch bondbaren Schmelzfasern, Fluff-Pulp-Fasern und Splitfilmfasern,
(e) einer thermisch gebondeten Mischung aus gemischten elektrostatischen Fasern.

8. Filter nach Anspruch 7, wobei die thermisch bondbaren Schmelzfasern Bikomponentenpolymerfasern sind.

9. Filter nach Anspruch 8, wobei die Bikomponentenpolymerfasern Polyolefin sind.

10. Filter nach Anspruch 9, wobei die Bikomponentenpolymerfasern einen Kern aus Polypropylen und einen Mantel aus Polyethylen haben.

11. Filter nach Anspruch 8, wobei die Bikomponentenpolymerfasern einen Kern haben, der exzentrisch bezüglich des Mantels angeordnet ist.

12. Filter nach Anspruch 11, wobei der Kern längsseits des Mantels angeordnet ist.

13. Filter nach Anspruch 11, wobei die Splitfilmfasern elektrostatisch geladen sind.

14. Filter nach Anspruch 1, weiterhin umfassend eine Meltblown-Vliesschicht mit einem Flächengewicht von etwa 10 - 50 g/m² und einer Luftdurchlässigkeit von etwa 100 - 1500 l/(m² x s), die zwischen der Mehrzweck-Filtrationsschicht und der zweiten Filtrationsschicht angeordnet ist.

15. Filter nach Anspruch 14, wobei die Meltblown-Vliesschicht elektrostatisch geladen ist.

16. Filter nach Anspruch 1, wobei das thermisch gebondete Nonwoven die am weitesten stromabwärts angeordnete Schicht ist.

17. Filter nach Anspruch 1, wobei wenigstens zwei benachbarte Schichten der Struktur gebondet sind.

18. Filter nach Anspruch 17, wobei die zwei gebondeten benachbarten Schichten die Mehrzweck-Filtrationsschicht und die zweite Filtrationsschicht sind.

19. Filter nach Anspruch 17, wobei alle benachbarten Schichten der Struktur gebondet sind.

20. Filter nach Anspruch 1, wobei das hochvoluminöse Meltblown-Nonwoven elektrostatisch geladen ist

21. Filter nach Anspruch 1, wobei wenigstens eine der Schichten aus einem aufladbaren Material ist und die aufladbare Schicht elektrostatisch geladen ist.

22. Wegwerfstaubsaugerbeutel umfassend einen Filter nach einem der Ansprüche 1 - 21.

## Revendications

1. Un filtre pour enlever des particules entraînées dans un gaz comprenant une couche multiusages à capacité de filtration positionnée en amont d'une seconde couche de filtration dans la direction du flux d'air,
La seconde couche de filtration étant sélectionnée parmi :
(a) un filtre appliqué par voie mouillée ou par voie sèche ayant un poids de base d'environ 30-100 g/m² et une perméabilité à l'air d'environ 100-3000 l/( m² x s) ; et
(b) un non-tissé lié thermiquement ayant un poids de base d'environ 10-100 g/ m² et une perméabilité à l'air d'environ 100-3000 l/( m² x s) ; et
la couche multiusages à capacité de filtration étant sélectionnée parmi :
(a) un papier à haute capacité de poussière appliqué par voie mouillée ou par voie sèche ayant un poids de base d'environ 30-150 g/ m² et une perméabilité à l'air d'environ 500-8000 l/( m² x s) ;
(b) un non-tissé fondu à haut volume ayant un poids de base d'environ 30-180 g/ m² et une perméabilité à l'air d'environ 300-1500 l/( m² x s) ; et
(c) un papier filé soufflé modulaire ayant un poids de base d'environ 20-150 g/ m² et une perméabilité à l'air d'environ 200-3000 l/( m² x s).

2. Le filtre selon la revendication 1 dans lequel la couche multiusages de filtration est opérationnelle pour apporter au filtre une chute de pression d'au maximum 30 mbar pour une charge de fines particules de poussière d'au moins 6.5 grammes déterminé par DIN 44956-2.

3. Le filtre selon la revendication 1 dans lequel le papier à haute capacité de poussière appliqué par voie mouillée comprend des fibres comprenant au moins 15 % de fibres synthétiques chargeables ou non- chargeables et une quantité complémentaire de fibres de pâte de bois, et de liant.

4. Le filtre selon la revendication 3 dans lequel les fibres synthétiques sont en polyester.

5. Le filtre selon la revendication 3 dans lequel les fibres synthétiques sont des fibres de polyoléfine.

6. Le filtre selon la revendication 5 dans lequel les fibres de polyoléfine sont en polypropylène électrostatiquement chargé.

7. Le filtre selon la revendication 1 dans lequel la couche multiusages comprend un papier à haute capacité de poussière appliqué par voie sèche, de composition sélectionnée parmi :
(a) des fibres de pulpe de duvet liées à du latex
(b) des fibres fondantes liables thermiquement
(c) un mélange lié thermiquement de fibres de polymères fondantes liables thermiquement et de fibres de pulpe de duvet,
(d) un mélange lié thermiquement de fibres fondantes liables thermiquement, de fibres de pulpe de duvet et de fibres de film déchiré,
(e) un mélange lié thermiquement de fibres mélangées électrostatiques.

8. Le filtre selon la revendication 7 dans lequel les fibres fondantes liables thermiquements sont des fibres bicomposantes de polymères.

9. Le filtre selon la revendication 8 dans lequel les fibres bicomposantes de polymères sont en polyoléfine.

10. Le filtre selon la revendication 9 dans lequel les fibres bicomposantes de polymère ont une partie centrale faite de polypropylène et un manchon fait de polyéthylène.

11. Le filtre selon la revendication 8 dans lequel les fibres bicomposantes de polymère ont une partie centrale disposée de manière excentrique par rapport au manchon.

12. Le filtre selon la revendication 11 dans lequel la partie centrale est positionnée le long du manchon.

13. Le filtre selon la revendication 7 dans lequel les fibres de film déchiré sont électrostatiquement chargées.

14. Le filtre selon la revendication 1 comprenant de plus une couche de molleton soufflé en fusion ayant un poids de base d'environ 10-50g/ m², et une perméabilité à l'air d'environ 100-1500 l/( m² x s), positionnée entre la couche multiusages de filtration et la seconde couche de filtration.

15. Le filtre selon la revendication 14 dans lequel la couche de molleton soufflé en fusion est électrostatiquement chargée.

16. Le filtre selon la revendication 1 dans lequel le non-tissé lié thermiquement est la couche la plus en aval de la structure.

17. Le filtre selon la revendication 1 dans lequel au moins deux couches adjacentes de la structure sont liées.

18. Le filtre selon la revendication 17 dans lequel les deux couches adjacentes liées sont la couche multiusages de filtration et la seconde couche de filtration.

19. Le filtre selon la revendication 17 dans lequel toutes les couches adjacentes de la structure sont liées.

20. Le filtre selon la revendication 1 dans lequel le non-tissé à haut volume soufflé en fusion est électrostatiquement chargé.

21. Le filtre selon la revendication 1 dans lequel au moins une des couches est faite d' un matériau chargeable et la couche chargeable est électrostatiquement chargée.

22. Un sac jetable d'aspirateur comprenant un filtre selon une des revendications 1-21.
